# EUROPEAN PATENT APPLICATION

(11) **EP 4 700 670 A1**
(43) Date of publication of application: **25.02.2026**
(21) Application number: 25193041.8
(22) Date of filing: 31.07.2025
(51) Int. Cl.: G06Q 10/0631

(54) **JOB SCHEDULING WITH EFFICIENCY FILTERS**

(30) Priority: 21.08.2024 US 202418811357
(71) Applicant: Microsoft Technology Licensing, LLC, Redmond, WA 98052 (US)
(72) Inventor: POMERANTZ, Stephanie Rosenthal, Redmond, 98052-6399 (US); GAO, Ning, Redmond, 98052-6399 (US); FANG, Chenlei, Redmond, 98052-6399 (US); YANG, Hung-Chih, Redmond, 98052-6399 (US)
(74) Representative: CMS Cameron McKenna Nabarro Olswang LLP

(57) **Abstract**

A job scheduling technology computationally selects jobs from a set, excluding at least one job by applying at least one job filter, submits the selected jobs to a scheduler mechanism, receives in response a first phase schedule, and produces a second phase schedule updating the first phase schedule to include at least one excluded job. The update avoids computational costs of combinatorial explosion. In some scenarios, a location-agnostic job is excluded from the first phase schedule and then included in the updated schedule. In some scenarios, applying the filters sorts the jobs for submission to the scheduler mechanism.

## Description

### BACKGROUND

Technical fields such as artificial intelligence and operations research utilize constraint satisfaction technology to help solve problems that involve a set of constraints for particular variables to satisfy. Some of the techniques and tools used by constraint satisfaction technology implemented in computing systems include constraint logic programming, backtracking search, constraint propagation, local search, a simplex algorithm for solving linear or polynomial equations or inequalities, and constraint satisfaction toolkits which are computationally accessed by software in C, C++, Comet, Java, Lisp, Prolog, Python, and other programming languages.

In general, constraint satisfaction is complex and therefore difficult to perform computationally. Solving a constraint satisfaction problem on a finite domain is an NP-complete problem with respect to the size of the domain. A NP-complete problem is a problem for which no polynomial-time solution is known. In addition to constraint satisfaction, some other examples of NP-complete problems include graph-covering problems and the traveling salesperson problem. The traveling salesperson problem is how to visit each city on a given list of cities exactly once and return back to the starting city, while following the shortest possible route.

In some situations, an administrative change can avoid the difficulty of solving a given constraint satisfaction problem by abandoning the original problem and solving a simpler problem instead. For instance, a given traveling salesperson problem is replaced by a simpler problem when an administrative change removes one or more cities from the list, so the traveling salesperson is no longer required to visit all the cities on the original list.

But administrative changes are not always available, and not always acceptable. Thus, technology improvements that make constraint satisfaction more computationally efficient would be beneficial.

### SUMMARY

Some embodiments address technical challenges arising in job scheduling. One challenge is how to improve the efficiency of job scheduling by technical improvements, as opposed to administrative changes. Another challenge is how to optimally account for jobs that are not tied to a particular physical location, when generating a schedule that also schedules location-specific jobs. Another challenge is how to optimally sort jobs for submission to a black box scheduling mechanism. Another challenge is how to balance a scheduling workload between a constraint satisfaction solver and other scheduling mechanisms. Other technical challenges are also addressed herein.

Some embodiments taught herein provide or utilize job scheduling technology which computationally (a) forms a nonempty subset of selected jobs by selecting multiple jobs from a set of jobs, the selecting excluding from the subset at least one job by applying at least one job filter, (b) submits the subset of selected jobs to a scheduler mechanism, (c) receives from the scheduler mechanism a first phase schedule which specifies scheduled jobs, and (d) produces a second phase schedule at least by updating the first phase schedule to include at least one job which was excluded by applying at least one of the job filters. In some scenarios, a location-agnostic job is excluded from the first phase schedule and then included in the second phase schedule. In some scenarios, applying the filters has a result of sorting jobs for submission to the scheduler mechanism. Other job scheduling refinements and variations are also taught herein.

Additional technical activities, technical characteristics, and technical benefits pertinent to teachings herein will also become apparent to those of skill in the art. The examples given are merely illustrative. This Summary is not intended to identify key features or essential features of the claimed subject matter, nor is it intended to be used to limit the scope of the claimed subject matter. Rather, this Summary is provided to introduce - in a simplified form - some technical concepts that are further described below in the Detailed Description. Subject matter scope is defined with claims as properly understood, and to the extent this Summary conflicts with the claims, the claims should prevail.

### BRIEF DESCRIPTION OF THE DRAWINGS

A more particular description will be given with reference to the attached drawings. These drawings only illustrate selected aspects and thus do not fully determine coverage or scope.
Figure 1 is a diagram illustrating aspects of computer systems and also illustrating configured storage media, including some aspects generally suitable for embodiments which include or use job scheduling with efficiency filters (JSEF) functionality;
Figure 2 is a block diagram illustrating aspects of a family of enhanced systems which are each configured with JSEF functionality;
Figure 3 is a block diagram illustrating some aspects of jobs and associated data structure or other computational representations of jobs;
Figure 4 is a block diagram illustrating some aspects and examples of job filters in a computing system;
Figure 5 is a block diagram illustrating aspects of some resources which can be scheduled to perform jobs;
Figure 6 is a block diagram illustrating some aspects of job scheduling in a computing system;
Figure 7 is a flowchart further illustrating some JSEF methods;
Figure 8 is a flowchart further illustrating JSEF methods, and incorporating as options the steps of Figure 7, Figure 9, and other steps discussed herein; and
Figure 9 is a flowchart further illustrating some JSEF methods.

### DETAILED DESCRIPTION

### Overview

Some teachings described herein were motivated by technical challenges faced and insights gained during efforts to improve job scheduling software. These challenges and insights provided some motivations, but the teachings herein are not limited in their scope or applicability to these particular tools, motivational challenges, solutions, or insights.

In some scenarios, a field technician, plumber, maintenance engineer, or other human service provider has jobs to be done at various job locations. This raises the problem of trying to determine an optimal route for the service provider to travel to the jobs. Some software tools accordingly attempt to generate an optimal job schedule, e.g., first travel to a location L7 and do a job J14, then travel to a location L3 and do a job J5, then travel to a location L12 and do a job J44, and so on. In this example and elsewhere herein, numbers in identifiers are meant merely to distinguish items, not to necessarily indicate an order of job performance, or a spatial relationship, or a priority, a category, etc. The job schedule's route reflects an effort to be optimal according to some measure, e.g., least time spent traveling, largest number of jobs completed, etc.

As inputs, a job scheduling software tool sometimes has data such as the set of possible jobs for the service provider to complete, job priorities and other preferences representing the importance of completing various jobs, promised time windows for the service provider to arrive at the jobs (e.g., a customer is only available in the mornings), a working time window for the service provider, the service provider's own starting and ending location(s), and so on. But even with such constraint data, the job scheduling software often faces a challenge based on a combinatorial explosion. The computational complexity of scheduling grows rapidly as jobs are added to the list of jobs to be scheduled.

In one example scenario, there are 50 possible jobs, but only 5 jobs will fit into a workday. The number of possible combinations of 5 jobs chosen from 50 jobs is (50!/(45!*5!)), which is more than two million (2118760). The exclamation sign ! represents a factorial operation. N! equals the product of all numbers from 1 through N, e.g., 5! = 5*4*3*2*1. Moreover, these are the combinations, not the permutations - combinations do not specify an order, whereas permutations do specify order. The number of possible permutations of 5 jobs chosen from 50 jobs is (50!/(50-5)!), which equals 50*49*48*47*46, which is more than 254 million (254251200). An algorithm to find an optimal selection of 5 jobs from the set of 50 jobs, and an optimal ordering of those 5 jobs (i.e., an optimal permutation), by comparing each possibility to every other possibility, would therefore take a very long time to run. However, seeking some amount of schedule optimization is often worth some computational cost, in order to make the service provider's services more efficient.

An administrative action could reduce the number of possibilities, and thereby reduce the computational costs of scheduling, by striking jobs from the list of possible jobs to be scheduled. This administrative action could be taken by a service provider's manager, for instance, in response to business or legal considerations such as overdue customer accounts, an upcoming vacation, or a regulation limiting the number of unscheduled jobs carried on the books for more than two weeks. Suppose 30 jobs are stricken from the list by the manager for these or other non-technical (administrative) reasons, leaving only 20 jobs to be scheduled instead of 50 jobs. Then the total number of permutations would be reduced from over 254 million to (20!/(20-5)!) = 20*19*18*17*16, which is less than 2 million (1860480).

But what about situations in which jobs are not simply stricken by an administrator from the list of jobs to be scheduled? Instead of administrative approaches to reducing computational cost, the present disclosure focuses on situations in which computational efficiency is gained by improvements in the scheduling technology. When an embodiment does remove a job from a list, the removal is arrived at by technical considerations, not as an administrative action. For example, in some embodiments a computing system's execution of a shift duration filter removes jobs that take too long to fit into a workday when travel time and the job duration are both considered. Given a ten-hour workday, this computational filter will identify and remove from scheduling a job that requires twelve contiguous hours, and will likewise identify and remove a job that requires ten contiguous hours plus at least one hour of travel.

Instead of striking a job so that the job is not even considered for scheduling, some embodiments temporarily withhold the job. The job still gets scheduled, but not in the same way or at the same time that other jobs are scheduled. Some example embodiments balance scheduling workloads between a computationally expensive mechanism and a less expensive and simpler mechanism. This workload balancing includes selecting a proper subset of the jobs to be scheduled, submitting the subset to a scheduler mechanism such as a constraint satisfaction solver, receiving a first schedule from the solver, and then adding other jobs to the first schedule to produce a second schedule. A first phase of scheduling in this example is subject to combinatorial explosion during computation because it uses the constraint satisfaction solver. However, the first phase computational load is reduced by withholding one or more jobs from the constraint satisfaction solver; an execution of one or more software filters determines which job(s) are withheld.

A second phase of scheduling avoids combinatorial explosion by using a different algorithm than the solver's algorithm. For instance, in some embodiments the second phase computation places a previously withheld job in the earliest sufficiently large gap in the first schedule, and in some embodiments the second phase places the previously withheld job in a sufficiently large gap in the first schedule which has an adjacent scheduled job whose physical location is within a specified distance of the withheld job's physical location. Other job placement algorithms are also used in some embodiments.

Some embodiments described herein utilize or provide a job scheduling method which is performed by a computing system; these are also referred to herein as job scheduling with efficiency filters (JSEF). One JSEF method includes (a) forming a nonempty subset of selected jobs by selecting multiple jobs from a set of jobs, the selecting excluding from the subset at least one job by applying at least one job filter, (b) submitting the subset of selected jobs to a scheduler via an application program interface, (c) receiving from the scheduler via the application program interface a first phase schedule which specifies scheduled jobs, and (d) producing a second phase schedule at least by updating the first phase schedule to include at least one job which was excluded by applying at least one of the job filters. In some embodiments, additional phases of scheduling further modify the schedule.

This multi-phase JSEF functionality has the technical benefit of improving job scheduling computational efficiency by reducing the number of jobs submitted to the scheduler without also preventing non-selected jobs from inclusion in the final version of the schedule. Reducing the number of jobs submitted to the scheduler mitigates against combinatorial explosion, and thereby improves scalability with respect to the number of jobs when they are withheld jobs. Unlike an administrative action that reduces the number of jobs by striking jobs so they are never scheduled, the two-phase algorithm described herein reduces the number of jobs submitted by withholding one or more jobs in the first phase, and then some or all of the withheld jobs are subsequently added to the schedule in the second phase. Withholding a job to be added to a schedule later is not computationally the same as striking a job so it will never be scheduled.

Another technical benefit of this multi-phase JSEF functionality is enhanced security. In some configurations, the scheduler is remote from a secured enterprise but the second phase scheduling software is local. In these configurations, this JSEF functionality also enhances security by reducing the amount or the kind (or both) of confidential job information which is sent offsite. Security preferences are enforced in some embodiments by a preferences filter.

In some embodiments, the set of job filters includes a location freedom filter which is configured to computationally filter in location-specific jobs or to computationally filter out location-agnostic jobs, or to do both. This JSEF location freedom filter functionality has the technical benefit of distinguishing between (a) jobs that can be done at any of a set of various physical locations, and (b) jobs that are limited to a particular physical location. For instance, some jobs that install or repair a particular piece of equipment are tied to a particular physical location, whereas many jobs that can be handled by phone or video conference or other remote communications do not limit the service provider to any particular physical location.

It is technically beneficial to distinguish location-agnostic jobs because they tend to contribute substantially to combinatorial explosion. When generating a schedule, the scheduler mechanism has more possibilities to explore, because the travel time or distance constraints constrain the possibility space less (or not at all) with regard to location-agnostic jobs than they do with regard to location-specific jobs. Some embodiments withhold location-agnostic jobs from the scheduler mechanism and instead add them during the second phase of scheduling. Some embodiments impose location restrictions on location-agnostic jobs, to reduce the number of scheduling possibilities during either or both scheduling phases.

In some embodiments, a JSEF method includes at least one of: choosing the scheduler from a set of at least two schedulers, the choosing computed from at least an efficiency target; or providing an efficiency target to the scheduler via the application program interface. This JSEF scheduler tailoring functionality has the technical benefit of tailoring the scheduling to different kinds of efficiency. Indeed, in some scenarios different schedules are produced for the same set of jobs using different efficiency targets, and then a tool or a user receives a set of schedules to choose from.

Some examples of efficiency targets include minimizing travel time, maximizing the number of jobs scheduled within a shift, maximizing the sum of scheduled job durations, maximizing the number of deadline jobs scheduled, maximizing a sum of respective priorities of the scheduled jobs, and weighted sums of these maximizations. Some other efficiency targets include minimizing a delta (i.e., difference) between different resource characteristics and the required or aid characteristics for the jobs, e.g., skill level, and reducing the amount of change between versions of a schedule. One of skill will also recognize other efficiency targets.

In some embodiments, a JSEF system includes at least one of: a mandatory job filter which is configured to computationally filter in jobs which are mandatory or to computationally filter out jobs which are not mandatory, or to do both; or a deadline job filter which is configured to computationally filter in jobs which have a deadline or to computationally filter out jobs which do not have a deadline, or to do both.

In some embodiments one or more of the following filters are also applied: a maximum job count filter which constrains the subset to include at most a maximum number of jobs; a job categories filter which constrains the subset according to an ordering of job categories; a job priorities filter which constrains the subset according to job priorities; a shift duration filter which excludes from the subset a job for which an expected job duration plus a base travel time is greater than a shift duration; or a shift duration filter which excludes from the subset a job for which an expected job duration plus an estimate of battery usage during travel is greater than a shift duration.

This JSEF subset focusing functionality has the technical benefit of focusing the subset of selected jobs on jobs which are more important (e.g., mandatory, or subject to a deadline) than other jobs in the set of possible jobs. The focus on more important jobs promotes more efficient use of computational resources (e.g., processor, memory, network bandwidth, electric power) by the scheduler mechanism. The greater the number of jobs submitted to the scheduler mechanism is, the more valuable computational efficiency becomes, due to the corresponding combinatorial explosion within the space of possible job schedules that is explored by the scheduler mechanism.

In some embodiments, a JSEF system is configured to schedule a fleet of resources to collectively perform at least a majority of the set of jobs. In particular, in some embodiments a scheduler mechanism considers jobs that require multiple people (or multiple service-providing machines) and considers different people (or different service-providing machines) to do at least part of a single job.

This fleet-scheduling JSEF functionality has the technical benefit of increasing the efficiency of service provider deployment and utilization, for service provider machines as well as for service provider humans. In particular, scheduling for a fleet instead of a single service provider allows the scheduler mechanism to rule out some of the possibilities one time for a set of multiple schedules, instead of ruling them out again and again for each schedule in turn, which aids efficiency and scaling by reducing the computational cost of ruling out some of the possibilities that are created by combinatorial explosion.

**In** some embodiments, a JSEF system is configured to proactively trigger at least one resource to perform at least one job according to a second phase schedule. The "resource" in this context is a service provider, and depending on the situation is a human, a machine, or a human paired with a machine. In other words, the "resource" in this context is what performs the job.

This JSEF proactive schedule performance functionality has the technical benefit of increasing the efficiency of service provider deployment and utilization, e.g., by decreasing any delay from schedule definition to the start of travel or the start of job performance. As soon as the schedule is determined, work can get started, or at the least the preparations for a scheduled job can get underway.

In some embodiments, a JSEF system is configured to update the first phase schedule by applying a location restriction filter to a particular location-agnostic job, thereby restricting the particular location-agnostic job to a nonempty proper subset of physical locations which have scheduled jobs in the first phase schedule; submitting the first phase schedule, the particular location-agnostic job, and the subset of physical locations to the scheduler via the application program interface; and receiving the second phase schedule from the scheduler via the application program interface.

This JSEF location restriction filter functionality has the technical benefit of reducing computational costs due to combinatorial explosion in the scheduler. Instead of considering every possible location as a location for the particular location-agnostic job, the scheduler considers fewer locations, as a result of applying the location restriction filter.

In some embodiments, a JSEF system is configured to calculate a base travel time for a location-specific job, wherein the base travel time is calculated as a minimum of estimated travel times to the location-specific job from other location-specific jobs in the set of jobs, wherein the location-specific job is in the subset of selected jobs, and wherein the base travel time for the job adhered to a first granularity when the subset of selected jobs was submitted to the scheduler; and produce the second phase schedule at least by revising the base travel time for the location-specific job to adhere to a second granularity, the second granularity being finer than the first granularity.

For example, in some scenarios the scheduler generates the first phase schedule at a 30-minute granularity, i.e., the schedule grid uses 30-minute intervals. Then the schedule is revised to use a 10-minute granularity. As a result of the revision, a 30-minute travel time is revised to be a 10-minute travel time plus two openings (unscheduled gaps) of 10-minutes each. Then the adjacent gaps are filled by adding a 20-minute location-agnostic job, as part of the second phase schedule. In some embodiments, a preferences filter restricts the number of jobs sent to a scheduler based on at least the granularity to be used by the scheduler.

This JSEF granularity reduction functionality has the technical benefit of reducing computational cost incurred by the scheduler as it produces the first phase schedule, because at the larger granularity there are fewer possibilities for the scheduler to consider. The workload of adding the 20-minute location-agnostic job in this example is moved from the scheduler to a later, simpler, less-expensive algorithm, e.g., a linear search of schedule gaps to find one large enough to hold the job to be added. Indeed, in some embodiments the larger granularity and the smaller granularity are calculated to differ by an amount which is big enough to contain at least one location-specific job (duration plus a base travel time), or to contain at least N location-agnostic jobs, for example.

These and other benefits will be apparent to one of skill from the teachings provided herein.

### Operating Environments

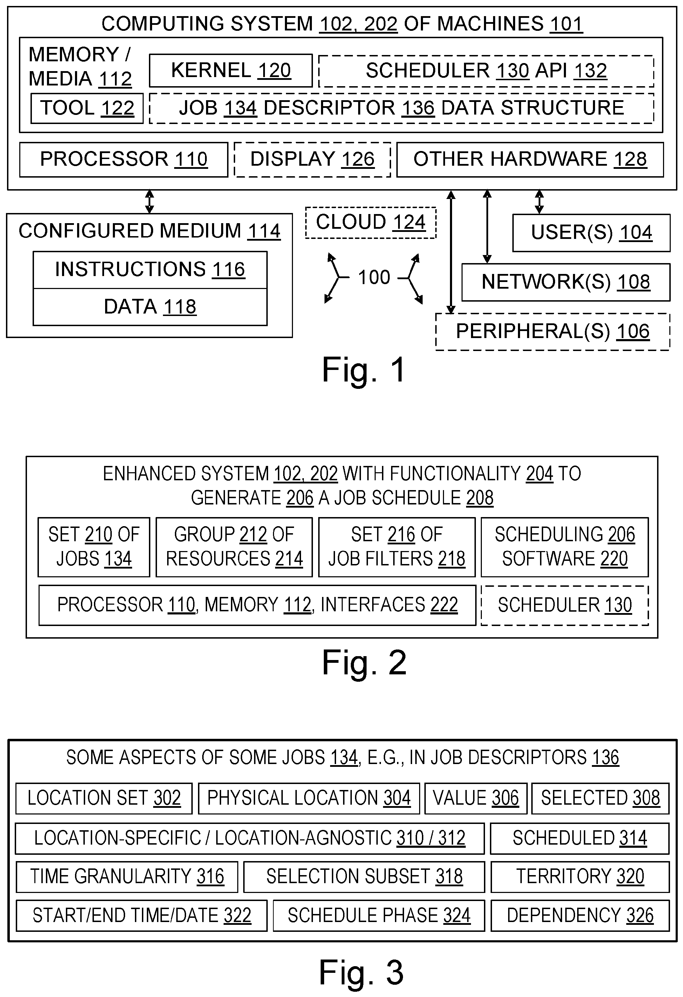

With reference to Figure 1, an operating environment 100 for an embodiment includes at least one computer system 102. The computer system 102 may be a multiprocessor computer system, or not. An operating environment may include one or more machines in a given computer system, which may be clustered, client-server networked, and/or peer-to-peer networked within a cloud 124. An individual machine is a computer system, and a network or other non-empty group of cooperating machines is also a computer system. A given computer system 102 may be configured for end-users, e.g., with applications, for administrators, as a server, as a distributed processing node, and/or in other ways.

Human users 104 sometimes interact with a computer system 102 user interface by using displays 126, keyboards 106, and other peripherals 106, via typed text, touch, voice, movement, computer vision, gestures, and/or other forms of I/O (input/output). Virtual reality or augmented reality or both functionalities are provided by a system 102 in some embodiments. A screen 126 is a removable peripheral 106 in some embodiments and is an integral part of the system 102 in some embodiments. The user interface supports interaction between an embodiment and one or more human users. In some embodiments, the user interface includes one or more of: a command line interface, a graphical user interface (GUI), natural user interface (NUI), voice command interface, or other user interface (UI) presentations, presented as distinct options or integrated.

System administrators, network administrators, cloud administrators, security analysts and other security personnel, operations personnel, developers, testers, engineers, auditors, and end-users are each a particular type of human user 104. In some embodiments, automated agents, scripts, playback software, devices, and the like running or otherwise serving on behalf of one or more humans also have user accounts, e.g., service accounts. Sometimes a user account is created or otherwise provisioned as a human user account but in practice is used primarily or solely by one or more services; such an account is a de facto service account. Although a distinction could be made, "service account" and "machine-driven account" are used interchangeably herein with no limitation to any particular vendor.

The distinction between human-driven accounts and machine-driven accounts is a different distinction than the distinction between attacker-driven accounts and non-attacker driven accounts. A particular human-driven account may be attacker-driven, or non-attacker-driven, at a given point in time. Similarly, a particular machine-driven account may be attacker-driven, or non-attacker-driven, at a given point in time.

Although for convenience, examples and claims herein sometimes speak in terms of accounts, "account" means "account or session or both" unless stated otherwise. In this disclosure, including in the claims and elsewhere, a statement about activity by "the user account or the user session" does not mean that both the user account and the user session must be present. Instead, such a statement is to be understood as a pair of corresponding but distinct statements given as alternatives, one statement being about activity by the user account, and the other statement being about activity by the user session. Likewise, a characterization of "the user account or the user session" does not mean that both the user account and the user session must be present. Instead, such a characterization is to be understood as a pair of corresponding but distinct characterizations given as alternatives, one characterizing the user account, and the other characterizing the user session.

Storage devices or networking devices or both are considered peripheral equipment in some embodiments and part of a system 102 in other embodiments, depending on their detachability from the processor 110. In some embodiments, other computer systems not shown in Figure 1 interact in technological ways with the computer system 102 or with another system embodiment using one or more connections to a cloud 124 and/or other network 108 via network interface equipment, for example.

Each computer system 102 includes at least one processor 110. The computer system 102, like other suitable systems, also includes one or more computer-readable storage media 112, also referred to as computer-readable storage devices 112. In some embodiments, tools 122 include security tools or software applications, mobile devices 102 or workstations 102 or servers 102, editors, compilers, debuggers and other software development tools, as well as APIs, browsers, or webpages and the corresponding software for protocols such as HTTPS, for example. Files, APIs, endpoints, and other resources may be accessed by an account or non-empty set of accounts, user or non-empty group of users, IP address or non-empty group of IP addresses, or other entity. Access attempts may present passwords, digital certificates, tokens or other types of authentication credentials.

Storage media 112 occurs in different physical types. Some examples of storage media 112 are volatile memory, nonvolatile memory, fixed in place media, removable media, magnetic media, optical media, solid-state media, and other types of physical durable storage media (as opposed to merely a propagated signal or mere energy). In particular, in some embodiments a configured storage medium 114 such as a portable (i.e., external) hard drive, CD, DVD, memory stick, or other removable nonvolatile memory medium becomes functionally a technological part of the computer system when inserted or otherwise installed, making its content accessible for interaction with and use by processor 110. The removable configured storage medium 114 is an example of a computer-readable storage medium 112. Some other examples of computer-readable storage media 112 include built-in RAM, ROM, hard disks, and other memory storage devices which are not readily removable by users 104. For compliance with current United States patent requirements, neither a computer-readable medium nor a computer-readable storage medium nor a computer-readable memory nor a computer-readable storage device is a signal per se or mere energy under any claim pending or granted in the United States.

The storage device 114 is configured with binary instructions 116 that are executable by a processor 110; "executable" is used in a broad sense herein to include machine code, interpretable code, bytecode, and/or code that runs on a virtual machine, for example. The storage medium 114 is also configured with data 118 which is created, modified, referenced, and/or otherwise used for technical effect by execution of the instructions 116. The instructions 116 and the data 118 configure the memory or other storage medium 114 in which they reside; when that memory or other computer readable storage medium is a functional part of a given computer system, the instructions 116 and data 118 also configure that computer system. In some embodiments, a portion of the data 118 is representative of real-world items such as events manifested in the system 102 hardware, product characteristics, inventories, physical measurements, settings, images, readings, volumes, and so forth. Such data is also transformed by backup, restore, commits, aborts, reformatting, and/or other technical operations.

Although an embodiment is described as being implemented as software instructions executed by one or more processors in a computing device (e.g., general purpose computer, server, or cluster), such description is not meant to exhaust all possible embodiments. One of skill will understand that the same or similar functionality can also often be implemented, in whole or in part, directly in hardware logic, to provide the same or similar technical effects. Alternatively, or in addition to software implementation, the technical functionality described herein can be performed, at least in part, by one or more hardware logic components. For example, and without excluding other implementations, some embodiments include one of more of: chiplets, hardware logic components 110, 128 such as Field-Programmable Gate Arrays (FPGAs), Application-Specific Integrated Circuits (ASICs), Application-Specific Standard Products (ASSPs), System-on-a-Chip components, Complex Programmable Logic Devices (CPLDs), and similar components. In some embodiments, components are grouped into interacting functional modules based on their inputs, outputs, or their technical effects, for example.

In addition to processors 110 (e.g., CPUs, ALUs, FPUs, TPUs, GPUs, and/or quantum processors), memory / storage media 112, peripherals 106, and displays 126, some operating environments also include other hardware 128, such as batteries, buses, power supplies, wired and wireless network interface cards, for instance. The nouns "screen" and "display" are used interchangeably herein. In some embodiments, a display 126 includes one or more touch screens, screens responsive to input from a pen or tablet, or screens which operate solely for output. In some embodiments, peripherals 106 such as human user I/O devices (screen, keyboard, mouse, tablet, microphone, speaker, motion sensor, etc.) will be present in operable communication with one or more processors 110 and memory 112.

In some embodiments, the system includes multiple computers connected by a wired and/or wireless network 108. Networking interface equipment 128 can provide access to networks 108, using network components such as a packet-switched network interface card, a wireless transceiver, or a telephone network interface, for example, which are present in some computer systems. In some, virtualizations of networking interface equipment and other network components such as switches or routers or firewalls are also present, e.g., in a software-defined network or a sandboxed or other secure cloud computing environment. In some embodiments, one or more computers are partially or fully "air gapped" by reason of being disconnected or only intermittently connected to another networked device or remote cloud. In particular, JSEF functionality 204 could be installed on an air gapped network 108 which is then updated periodically or on occasion using removable media 114, or not updated at all, depending on particular circumstances. Some embodiments also communicate technical data or technical instructions or both through direct memory access, removable or non-removable volatile or nonvolatile storage media, or other information storage-retrieval and/or transmission approaches.

One of skill will appreciate that the foregoing aspects and other aspects presented herein under "Operating Environments" form part of some embodiments. This document's headings are not intended to provide a strict classification of features into embodiment and non-embodiment feature sets.

One or more items are shown in outline form in the Figures, or listed inside parentheses, to emphasize that they are not necessarily part of the illustrated operating environment or all embodiments, but interoperate with items in an operating environment or some embodiments as discussed herein. It does not follow that any items which are not in outline or parenthetical form are necessarily required, in any Figure or any embodiment. In particular, Figure 1 is provided for convenience; inclusion of an item in Figure 1 does not imply that the item, or the described use of the item, was known prior to the current disclosure.

In any later application that claims priority to the current application, reference numerals may be added to designate items disclosed in the current application. Such items may include, e.g., software, hardware, steps, processes, systems, functionalities, mechanisms, devices, data structures, kinds of data, settings, parameters, components, computational resources, programming languages, tools, workflows, or algorithm implementations, or other items in a computing environment, which are disclosed herein but not associated with a particular reference numeral herein. Corresponding drawings may also be added.

### More About Systems

Figure 2 illustrates a computing system 102 configured by one or more of the JSEF functionality enhancements taught herein, resulting in an enhanced system 202. In some embodiments, this enhanced system 202 includes a single machine, a local network of machines, machines in a particular building, machines used by a particular entity, machines in a particular datacenter, machines in a particular cloud, or another computing environment 100 that is suitably enhanced as taught herein. Figure 2 items are discussed at various points herein.

Figure 3 shows some aspects of some jobs 134 as represented in some enhanced computing systems 202, e.g., as job descriptor data structures 136.

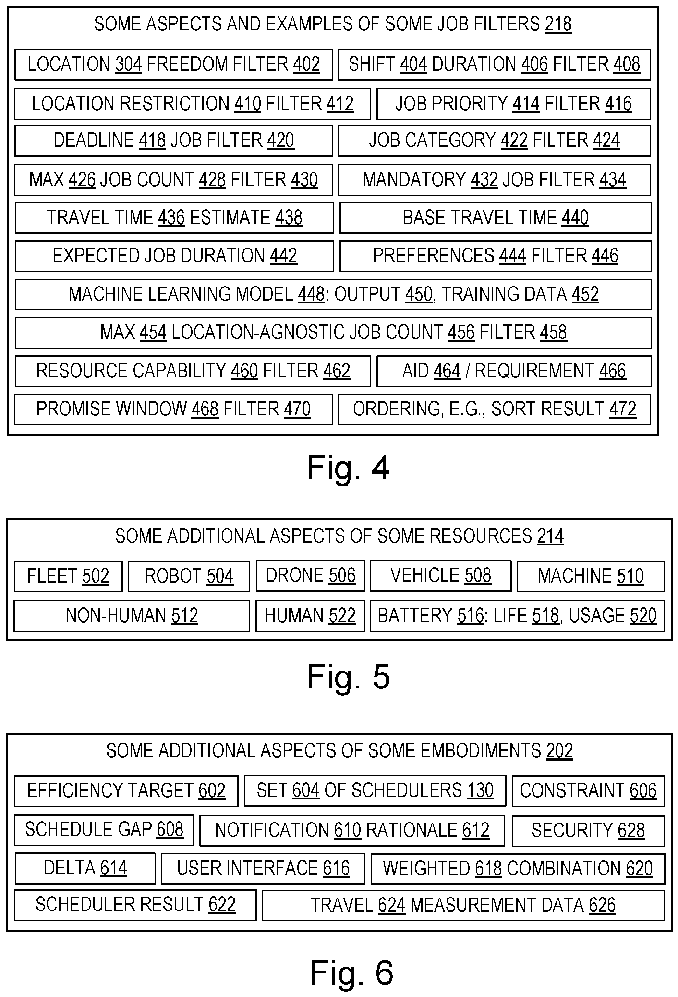

Figure 4 shows some aspects and examples of some job filters 218 in some enhanced computing systems 202.

Figure 5 shows some aspects and examples of some job performing resources 214, which are also referred to herein as service providers 214. Non-human resources 214 are part of some enhanced computing systems 202, e.g., robots 504, drones 506, vehicles 508, and other machines 510 (which may sometimes include computers 101). Human resources 214 are external to, but interact with, some enhanced computing systems 202, or respond to schedules from some enhanced computing systems 202. Some resources 214 are tied to a particular physical location 304, e.g., an operating room, a manufacturing facility, a laboratory, etc.

Figure 6 shows some additional aspects of some embodiments of JSEF functionality 204. Items shown in the figures are discussed at various points herein.

Like Figure 2, Figures 3 through 6 are neither individually nor collectively a comprehensive summary of all aspects of enhanced systems 202 or all aspects of JSEF functionality 204. Nor is any figure or group of figures a comprehensive summary of all aspects of an environment 100 or system 202 or other context of an enhanced system 202, or a comprehensive summary of any aspect of functionality 204 for potential use in or with a system 102.

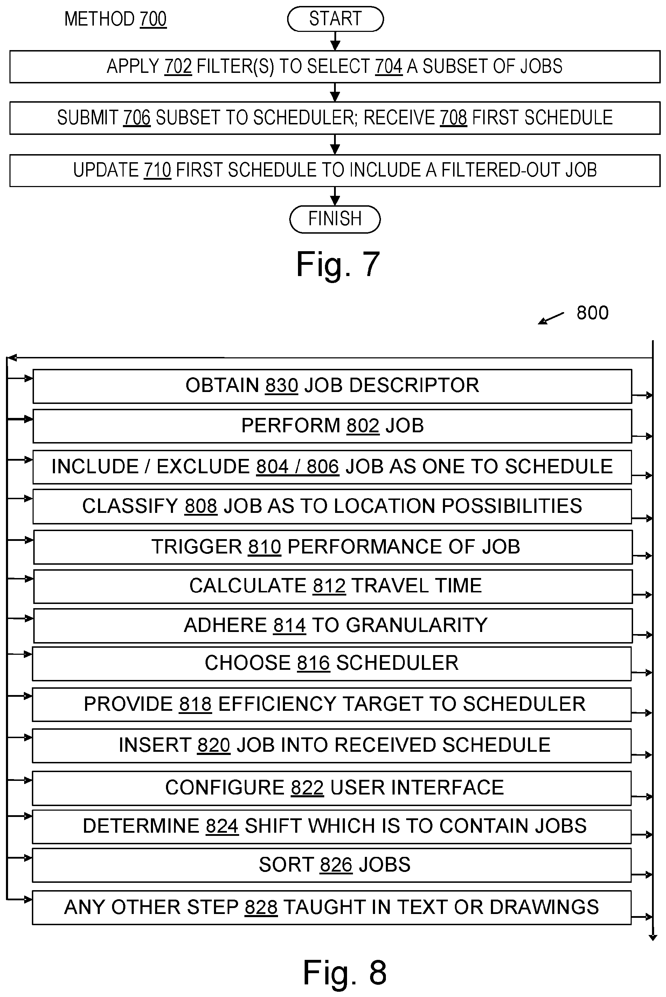

The other figures are also relevant to systems 202. Figures 7, 8, and 9 are flowcharts which illustrate some methods of JSEF functionality 204 operation in some systems 202.

In some embodiments, the enhanced system 202 is networked through an interface 222. In some, an interface 222 includes hardware such as network interface cards, software such as network stacks, APIs, or sockets, combination items such as network connections, or a combination thereof.

Some embodiments include a computing system 202 which is configured to utilize or provide JSEF functionality 204. The system 202 includes a digital memory set 112 including at least one digital memory 112, and a processor set 110 including at least one processor 110. The processor set is in operable communication with the digital memory set. A digital memory set is a set which includes at least one digital memory 112, also referred to as a memory 112. The word "digital" is used to emphasize that the memory 112 is part of a computing system 102, not a human person's memory. The word "set" is used to emphasize that the memory 112 is not necessarily in a single contiguous block or of a single kind, e.g., a memory 112 may include hard drive memory as well as volatile RAM, and may include memories that are physically located on different machines 101, but "memory" without set also includes systems with multiple memories. Similarly, the phrase "processor set" is used to emphasize that a processor 110 is not necessarily confined to a single chip or a single machine 101, but "processor" without set also includes systems with multiple processors.

All sets herein are non-empty unless described otherwise.

In this example, a computing system 202 configured for job scheduling includes at least one processor 110, which is in operable communication with at least one digital memory; the at least one digital memory includes volatile storage and non-volatile storage unless indicated otherwise.

The digital memory in this example contains one or more data structures 136 which correspond to a nonempty set 210 of jobs 134. Each job of the set has a resource group 212 identifying at least one resource 214 which has a capability 460 to perform at least a portion of the job. Each job of the set has an expected job duration 442. Each job of the set is classified as either location-agnostic 312 or location-specific 310, with each location-specific job specifying a physical location 304, and at least one job of the set being classified as location-agnostic.

In this example, the computing system 202 also includes a nonempty set 216 of job filters 218 which are each executable by the computing system.

The at least one processor 110 is configured to perform a job scheduling method 800. This method 800 includes (a) forming a nonempty subset 318 of selected jobs 308, 134 by selecting 704 multiple jobs from the set of jobs, the selecting including excluding 806 from the subset at least one job by applying 702 at least one of the job filters 218, (b) submitting 706 the subset of selected jobs to a scheduler 130 via an application program interface 132, (c) receiving 708 from the scheduler via the application program interface a first phase schedule 208 which specifies scheduled jobs, and (d) producing a second phase schedule 208 at least by updating 710 the first phase schedule to include 804 at least one job which was excluded 806 by applying at least one of the job filters.

Here, as elsewhere herein, labels such as (a), (b), etc. in a method description are meant to aid legibility of the description, not to impose a strict order or a total ordering of actions in the method. For instance, steps labeled as (a), (b), etc. for convenience may overlap in some embodiments, or interleave.

In some embodiments, the set 216 of job filters includes at least one of: a location freedom filter 402 which is configured to computationally filter in location-specific 310 jobs or to computationally filter out location-agnostic 312 jobs, or to do both; a shift duration filter 408 which is configured to computationally filter in jobs for which the expected job duration 442 plus a travel time estimate 438 does not exceed a shift 404 duration 406, or to computationally filter out jobs for which the expected job duration plus a travel time estimate does exceed a shift duration, or to do both; a mandatory job filter 434 which is configured to computationally filter in jobs which are mandatory 432 or to computationally filter out jobs which are not mandatory, or to do both; or a deadline job filter 420 which is configured to computationally filter in jobs which have a deadline 418 or to computationally filter out jobs which do not have a deadline, or to do both.

In some embodiments, the computing system 202 is configured to schedule 206 a fleet 502 of resources 214 to collectively perform at least a majority of the set 210 of jobs 134, or to perform at least a specified percentage of the set 210, or at least a specified number of jobs of the set 210.

In some embodiments, the computing system 202 is configured to proactively trigger 810 at least one resource 214 to perform 802 at least one job 134 according to the second phase schedule 208.

In some embodiments, the digital resource group 212 identifies as one or more resources 214 at least one of: a physical robot 504; a physical drone 506; a self-driving vehicle 508; a physical machine 510; or a non-human 512 physical resource 214. Humans 522 are not part of an embodiment, but data 118 representing humans 522 can be part of an embodiment.

Other system embodiments are also described herein, either directly or derivable as system versions of described processes or configured media, duly informed by the extensive discussion herein of computing hardware.

Although specific JSEF architecture examples are shown in the Figures, an embodiment may depart from those examples. For instance, items shown in different Figures may be included together in an embodiment, items shown in a Figure may be omitted, functionality shown in different items may be combined into fewer items or into a single item, items may be renamed, or items may be connected differently to one another.

Examples are provided in this disclosure to help illustrate aspects of the technology, but the examples given within this document do not describe all of the possible embodiments. A given embodiment may include additional or different kinds of JSEF functionality, for example, as well as different technical features, aspects, interfaces, mechanisms, software, expressions, operational sequences, commands, data structures, programming environments, execution environments, environment or system characteristics, agents, proxies, or other functionality consistent with teachings provided herein, and may otherwise depart from the particular examples provided.

### Processes (a.k.a. Methods)

Processes (which are also referred to as "methods" in the legal sense of that word) are illustrated in various ways herein, both in text and in drawing figures. Figures 7 to 9 each illustrate a family of methods 700, 800, and 900 respectively, which are performed or assisted by some enhanced systems, such as some systems 202 or another functionality enhanced system as taught herein. Method family 700 and method family 900 are each a proper subset of method family 800. Moreover, activities are identified in Figures 1 to 6 as explicit or implicit method steps, which are likewise incorporated into method 800, e.g., starting 322 a job, scheduling 206 jobs a.k.a. generating 206 a job schedule, categorizing 422 a job, training 452 a machine learning model, traveling 624 to or from a job, and so on. Also, steps that are not expressly tied to a particular reference number are not thereby excluded from method 800. These block diagrams and flowcharts are merely examples; as noted elsewhere, any operable combination of steps that are disclosed herein may be part of a given embodiment when called out in a claim.

Technical processes shown in the Figures or otherwise disclosed will be performed automatically, e.g., by an enhanced system 202, unless otherwise indicated. Related non-claimed processes may also be performed in part automatically and in part manually to the extent action by a human person is implicated, e.g., in some situations a human 104 types or speaks an input such as a particular name for a certain schedule 208 to be saved under in a computer memory 112, e.g., a filename. Such input is captured in the system 202 as digital text, or captured as digital audio which is then converted to digital text. Regardless, no process contemplated as an embodiment herein is entirely manual or purely mental; none of the claimed processes can be performed solely in a human mind or on paper. Any claim interpretation to the contrary is squarely at odds with the present disclosure.

In a given embodiment zero or more illustrated steps of a process may be repeated, perhaps with different parameters or data to operate on. Steps in an embodiment may also be done in a different order than the top-to-bottom order that is laid out in Figure 8. Figure 8 is a supplemental portion of the textual and figure drawing examples of embodiments provided herein and the descriptions of embodiments provided herein. In the event of any alleged inconsistency, lack of clarity, or excessive breadth due to an interpretation of Figure 8, the content of this disclosure shall prevail over that interpretation of Figure 8.

Arrows in process or data flow figures indicate allowable flows; arrows pointing in more than one direction thus indicate that flow may proceed in more than one direction. Steps may be performed serially, in a partially overlapping manner, or fully in parallel within a given flow. In particular, the order in which flowchart 800 action items are traversed to indicate the steps performed during a process may vary from one performance instance of the process to another performance instance of the process. The flowchart traversal order may also vary from one process embodiment to another process embodiment. Steps may also be omitted, combined, renamed, regrouped, be performed on one or more machines, or otherwise depart from the illustrated flow, provided that the process performed is operable and conforms to at least one claim of an application or patent that includes or claims priority to the present disclosure. To the extent that a person of skill considers a given sequence S of steps which is consistent with Figure 8 to be non-operable, the sequence S is not within the scope of any claim. Any assertion otherwise is contrary to the present disclosure.

Some embodiments provide or utilize a scheduling method 800 in a computing system 102, e.g., in a computer network 108. This method 800 includes automatically: obtaining 830, in the memory, one or more job descriptor data structures 136 which correspond to a nonempty set 210 of jobs 134, each job of the set having an expected job duration 442; classifying 808 multiple jobs of the set as respectively either location-agnostic 312 or location-specific 310, each location-specific job specifying a physical location 304, the classifying including classifying at least one job of the set as location-agnostic; forming a nonempty subset of selected jobs by selecting 704 multiple jobs of the set, the selecting including applying 702 a location freedom filter 402 which is configured to computationally filter in location-specific jobs or to computationally filter out location-agnostic jobs or to do both, the applying including 804 in the subset at least one location-specific job of the set and excluding 806 from the subset at least one location-agnostic job of the set; submitting 706 the subset of selected jobs to a scheduler 130 via an application program interface 132; receiving 708 from the scheduler via the application program interface a first phase schedule 208 which specifies scheduled jobs; and producing 914 a second phase schedule 208 at least by updating 710 the first phase schedule to include at least one location-agnostic job which was excluded by applying the location freedom filter.

In some embodiments, updating 710 the first phase schedule includes the computing system: applying 702 a location restriction filter 412 to a particular location-agnostic job, thereby restricting the particular location-agnostic job to a nonempty proper subset 302 of physical locations 304 which have scheduled jobs in the first phase schedule; submitting 706 the first phase schedule 208, the particular location-agnostic 312 job 134 (e.g., as a data structure 136), and the subset 302 of physical locations (as data 118 which identifies the locations 304) to the scheduler via the application program interface; and receiving 708 the second phase schedule from the scheduler via the application program interface. A proper subset of a larger set of locations is itself a set of locations.

Some embodiments attempt to reduce the number of combinations that are generated in pursuit of a schedule. Any location-agnostic job could take place at every possible location 304 unless the possible locations are restricted. Some embodiments therefore enforce a rule that location-agnostic jobs can only be done at the location 304 of one of their neighboring location-specific jobs (the job scheduled before the location-agnostic job or the job schedule after it). This reduces the number of locations substantially, thereby reducing computational load on the scheduler 130 in exchange for the loss of flexibility in scheduling the location-agnostic job.

In some scenarios, some embodiments schedule a location-agnostic job to occur during a location-specific job, when the resource(s) assigned to the location-specific job have sufficient capacity to also perform the location-agnostic job.

In some embodiments, selecting 704 multiple jobs includes the computing system performing at least one of: applying 702 a maximum job count filter 430 which constrains the subset to include at most a maximum 426 number 428 of jobs; applying 702 a job categories filter 424 which constrains the subset according to an ordering 472 of job categories 422; or applying 702 a job priorities filter 416 which constrains the subset according to job priorities 414.

In some embodiments, the method 800 includes the computing system: calculating 812 a base travel time 440 for a location-specific job, wherein the base travel time is calculated as a minimum of estimated travel times 438 to the location-specific job from other location-specific jobs in the set of jobs; setting 812 the base travel time to zero for a location-agnostic job; determining 824 a shift 404 which has a start time 322 and an end time 322, the shift having a shift duration 406 which is greater than zero; and applying 702 a shift duration filter 408 to at least a portion of the set 210 of jobs prior to submitting the subset of selected jobs to the scheduler, wherein applying the shift duration filter includes removing 806 from the set of jobs a job for which the expected job duration plus the base travel time is greater than the shift duration.

In some embodiments, the method 800 includes the computing system: calculating 812 a base travel time 440 for a location-specific job, wherein the base travel time is calculated as a minimum of estimated travel times 438 to the location-specific job from other location-specific jobs in the set of jobs, wherein the location-specific job is in the subset of selected 308 jobs, and wherein the base travel time for the job adhered 814 to a first granularity 316 when the subset of selected jobs was submitted 706 to the scheduler; and producing 914 the second phase schedule at least by revising 910 the base travel time for the location-specific job to adhere 814 to a second granularity 316, the second granularity being finer than the first granularity.

As an example of granularity revision, some embodiments get different types of travel data 626 from an external service, such as a trip planning service, a mapping service, or a traffic monitoring service, e.g., available via internet search engine sites or driver guidance applications. Factors that impact travel time and hence are reflected in, or reported as part of, traffic measurement data 626 include accidents on the road, the size of the vehicle, weight restrictions on the roads, construction, parking restrictions, and weather, for example.

In one scenario, an embodiment gets a list of travel times every 15 minutes through an optimization window (the window of shift(s) being scheduled). Physical distances do not always map consistently to travel times. Some roads are country roads and the travel times on those roads don't change much through the day and night, but on some other roads like highways the mapping between distance and travel time changes frequently. On the one hand, estimating travel using time-dependent travel data is desirable, e.g., because service providers 214 could be stuck in traffic for a long time if travel data isn't taken into account. But on the other hand, if a scheduling algorithm considers starting travel to each job at every 15-minute interval, the computation would be expensive because there are many 15-minute time blocks over the course of even a few days.

As another example, a schedule is initially computed using 30-minute blocks - every travel time and every job start time and every job end time is a multiple of 30 minutes; this reduces problem complexity for the solver as compared to using 10-minute blocks, for example. Then the resulting schedule is updated at the 10-minute granularity, and the updated schedule is given back to the scheduler, with some additional jobs, to generate an updated and possibly busier schedule.

In some scenarios, an initial schedule is updated using finer-grained travel estimates, and additional jobs are inserted during the second phase without invoking the solver again.

In some scenarios, an embodiment uses the scheduler 130 to solve at 30-minute increments, and then adds other jobs at other increments (even down to a one-second increment). Some embodiments computationally round travel times to the minute or to the nearest 5 minutes. Some round job durations and leave them rounded, and some amend rounded values afterwards. Some estimate the travel time, for the scheduler in phase one, as the maximum travel time that could occur, and then a post-scheduler time amendment fixes the time to the true (or at least more accurate) travel time for the exact minute it is scheduled.

Some embodiments also change the schedule depending on when the optimization window is (the window being scheduled). For example, in one scenario an embodiment plans one job per day when planning a month out, but then as the start date gets closer the embodiment amends the schedule to fit in another small job at the end of the day. Sometimes, the embodiment also adds more buffer time into a day, but if it rescheduled the day of, it sometimes removes more of that buffer time in response to increased scheduling certainty.

In a confidential prototype, an optional heuristic 218 adheres to a maximum travel time for the constraint solver, to reduce complexity; by taking the maximum, the travel will always be less than or equal to that travel cost, so it is accurate or an overestimate. Then, the prototype replaces the travel cost by a measured actual cost 626 at a 15-minute travel window. That granularity revision can leave gaps in the schedule. In one highway travel example, an estimate is two hours in traffic but the service provider encounters much lighter traffic, and a gap of one hour opens up. Some embodiments then move the jobs as early as possible, and then try to fill in any gaps with more jobs.

In some embodiments, the method 800 includes at least one of: choosing 816 the scheduler from a set 604 of at least two schedulers 130, the choosing computed from at least an efficiency target 602 to choose the scheduler best suited to meeting the efficiency target; or providing 818 an efficiency target 602 to the scheduler via the application program interface 132.

In some embodiments, updating 710 the first phase schedule includes inserting 820 the at least one location-agnostic job in at least one of: a gap 608 in the first phase schedule which is not occupied by any scheduled job; a travel time period 624 to a scheduled job; or a travel time period 624 from a scheduled job. In some scenarios, some embodiments schedule a first location-agnostic job next to a second location-agnostic job.

In some embodiments, the method 800 includes configuring 822 a user interface 616 of the computing system with a notification 610, the notification including at least one of: a rationale 612 for excluding 806 a particular job from at least one of the schedules; or a rationale 612 for including 804 a particular job in at least one of the schedules. For example, some notifications 610 report that a job was filtered because it is infeasible to reach, or because it didn't have a high enough priority to schedule. Some notifications report heuristic results, e.g., a location-agnostic job could not be scheduled next to a location-specific job because heuristic down-sampling filtered out the location-specific job's location. Some embodiments create notifications when jobs are added back, e.g., added into a second phase schedule, based on time or priority or both.

In some embodiments, the method 800 includes determining 824 a shift 404 which has a start time 322 and an end time 322, the shift having a shift duration 406 which is greater than zero, the shift duration computed at least from a battery 516 life 518 of a battery-powered machine 510; and applying 702 a shift duration filter 408 to at least a portion of the set of jobs prior to submitting 706 the subset of selected jobs to the scheduler, wherein applying the shift duration filter includes removing 806 from the set of jobs a job for which the expected job duration 442 plus an estimate of battery usage 520 during travel 624 is greater than the shift duration.

It is expected that job duration 442 will most often be greater than zero, but in some scenarios such as automated package delivery without stopping physical travel, or electronic delivery of data, a job duration equal to zero is used.

In some embodiments, selecting 704 multiple jobs includes the computing system applying 702 a preferences filter 446.

In some embodiments, the preferences filter 446 sorts at least a portion of the set of jobs according to an output 450 from a machine learning model 448, the machine learning model trained at least in part on training data 452 which represents customer preferences 444, e.g., indicating which jobs have greater value 306, greater urgency, less risk, and so on.

In some embodiments, the preferences filter 446 sorts at least a portion of the set of jobs according to security characteristics 628 and security preferences 444, e.g., favoring on-premise calculations, obtaining additional authentication or authorization to schedule certain jobs, and so on.

In some embodiments, the preferences filter 446 sorts at least a portion of the set of jobs according to travel time 440, and in some cases the preferences filter enforces a cutoff to exclude jobs whose travel time is greater than a specific threshold (the threshold is a default, or customer-defined, or user-defined, or machine-learned).

Some embodiments perform a secondary sort on job name, job number, or another job identifier, to detect duplicate lists.

A combined functionality preferences filter is itself a preferences filter, and a combination of preferences filters which have different respective functionalities by enforcing different preferences, is also itself a preferences filter.

### Configured Storage Media

Some embodiments include a configured computer-readable storage medium 112. Some examples of storage medium 112 include disks (magnetic, optical, or otherwise), RAM (random access memory), EEPROMs (electronically erasable read-only memories) or other ROMs (read-only memories), and other configurable memory, including in particular computer-readable storage media (which are not mere propagated signals). In some embodiments, the storage medium which is configured is in particular a removable storage medium 114 such as a CD, DVD, or flash memory. A general-purpose memory, which is removable or not, and is volatile or not, depending on the embodiment, can be configured in the embodiment using items such as job scheduling software 220, job descriptor data structures 136, resource group 212 data structures, executable job filters 218, efficiency targets 602 (which are implemented as digital variables or digital values), weighted combinations 620, job priorities 414, job categories 422, times 322, 436, 438, 440, location sets 302, various sets and subsets which are implemented as digital variables or digital values, notifications 610, and scheduler results 622, 208, in the form of data 118 and instructions 116, read from a removable storage medium 114 and/or another source such as a network connection, to form a configured storage medium. The foregoing examples are not necessarily mutually exclusive of one another.

The configured storage medium 112 is capable of causing a computer system 202 to perform technical process steps for providing or utilizing job scheduling functionality 204 as disclosed herein. The Figures thus help illustrate configured storage media embodiments and process (a.k.a. method) embodiments, as well as system and process embodiments. In particular, any of the method steps illustrated in Figures 7 to 9, or otherwise taught herein, may be used to help configure a storage medium to form a configured storage medium embodiment.

Some embodiments use or provide a computer-readable storage device (a.k.a. medium) 112, 114 configured with data 118 and instructions 116 which upon execution by a processor 110 cause a computing system 202 to perform a job scheduling method 800, the method performed by a computing system. This method 800 includes: forming a nonempty subset 318 of selected 308 jobs 134 by selecting 704 multiple jobs from a set 210 of jobs, the selecting including an action of excluding 806 from the subset at least a first job of the set by applying 702 at least a first job filter 218 and excluding 806 from the subset at least a second job of the set by applying 702 at least a second job filter 218; submitting 706 the subset of selected jobs to a scheduler 130 via an application program interface 132; receiving 708 from the scheduler via the application program interface a first phase 324 schedule 208 which specifies scheduled jobs 314; and producing 914 a second phase 324 schedule 208 at least by updating 710 the first phase schedule to include 804 at least the first job or the second job.

In some embodiments, the selecting 704 includes an action of sorting 826 jobs according to a weighted 618 combination 620. In some of these embodiments, the weighted combination in operation is computed from of at least three of: a job deadline 418, 618, a job priority 414, 618, a job expected duration 442, 618, or a travel time estimate 438, 618.

A confidential prototype uses two weighted combinations 620. Both combinations 620 use job deadline, job duration, priority, and travel time. One weighted sum is called "Maximize weighted priority", and it assigns the most weight 618 to deadline (count of jobs with a deadline), then priority (sum of priority), then duration (sum of duration spent in jobs), then travel time (negative sum of travel time). The other is "Maximize weighted utilization" and it assigns most weight to deadline, duration then priority then travel. In the prototype, weighting 618 is implemented as multiplication by a specified weight value. In some embodiments, weights are learned using a model 448. Some embodiments assign the most weight to whether a job was already on the schedule (trying not to change the schedule too much), and some assign the weight by whether the job was assigned to the preferred resource 214.

In some embodiments, selecting 704 multiple jobs includes the computing system applying 702 a job categories filter 424 which constrains the subset according to an ordering 472 of job categories 422. In some of these embodiments, at least one of the job categories represents at least one of: whether a job is mandatory 432; whether a job has a deadline 418; whether a job has a nonzero priority 414 (or equivalently a non-null priority, an enabled priority, etc.); a territory 320 containing a physical location of a job; or whether a resource group 212, which identifies at least one resource 214 which has a capability 460 to perform at least a portion of a job, identifies more than one resource 214. Note that the resources 214 are service provider resources 214, e.g., per Figure 5, as distinguished from computational resources such as processor 110 access, memory 112 space, network 108 bandwidth, and electric power.

In some embodiments, the selecting 704 includes at least one of: applying 702 a maximum job count filter 430 which constrains the subset to include at most a maximum 426 number of jobs; or applying 702 a maximum location-agnostic job count filter 458 which constrains the subset to include at most a maximum 454 number 456 of location-agnostic jobs.

In some embodiments, the selecting 704 includes at least one of: applying 702 a promise window filter 470 which is configured to computationally filter a job according to whether the job has a promise window 468; applying 702 a capability filter 462 which is configured to computationally filter a job according to a capability 460 which is designated as a requirement 466 to perform at least a portion of the job; or applying 702 a capability filter 462 which is configured to computationally filter a job according to a capability 460 which is designated as an aid 464 to perform at least a portion of the job. Lack of a required 466 capability prevents acceptable completion of the job, whereas lack of an aid 464 capability allows acceptable completion of the job but hinders job performance, resulting, e.g., in longer-than-expected actual job duration, lower job result quality, higher job result cost, or other undesirable conditions. In some embodiments, an efficiency target 602 is minimizing a delta (i.e., difference) 614 between different resource characteristics and the required or aid characteristics for the jobs.

### Additional Observations

Additional support for the discussion of JSEF functionality 204 herein is provided under various headings. However, it is all intended to be understood as an integrated and integral part of the present disclosure's discussion of the contemplated embodiments. This disclosure is meant to be understood as a whole. In particular, this disclosure is unlikely to be fully and properly understood during or after only a single top-to-bottom pass through its text. For a full and proper understanding, most if not all readers will also use keyword searches, reference numeral searches, correlation of the specification text with the drawing figures, correlation of the claims with the rest of the text and with the drawing figures, and other nonlinear reading approaches, in addition to reading the full text from top to bottom.

One of skill will recognize that not every part of this disclosure, or any particular details therein, are necessarily required to satisfy legal criteria such as enablement, written description, best mode, novelty, nonobviousness, inventive step, or industrial applicability. Any apparent conflict with any other patent disclosure, even from the owner of the present subject matter, has no role in interpreting the claims presented in this patent disclosure. It is in the context of this understanding, which pertains to all parts of the present disclosure, that examples and observations are offered herein.

The present disclosure involves scheduling jobs 134, and in particular provides various ways to improve scheduling efficiency. Some of the jobs have a respective physical location 304, while other jobs are location-agnostic 312. For example, in one scenario a schedule 208 of jobs for a plumber 214 includes location-specific 310 jobs at various building locations, and also includes a location-agnostic 312 job which can be done by phone at any scheduled location 304 or between scheduled locations 304 during travel 624.

A resource 214 performing a job may be a human (e.g., plumber, field technician, surgeon, etc.), or the resource 214 may be nonhuman (e.g., drilling rig 510, imaging device 510, construction equipment 510, etc.).

Some embodiments improve scheduling efficiency by reducing scheduler 130 computational load, which is accomplished in some scenarios by only giving the scheduler 130 location-specific 310 jobs to schedule and using other less expensive computation to schedule additional jobs. The embodiment adds 820 the location-agnostic jobs to the schedule generated by the scheduler, at points in that schedule 208 where there are sufficient gaps 608 between scheduled jobs. Some embodiments filter possible neighboring jobs that the location-agnostic job can or cannot be next to, as a location sample filter 218.

Some embodiments improve scheduling efficiency by reducing scheduler 130 computational load, which is accomplished in some scenarios by not giving the scheduler jobs that are too long to fit in a defined work period such as a shift 404 or a set of shifts 404. In some cases, jobs are filtered out and thus not scheduled in either a first phase or a second phase 324 of scheduling, e.g., when a shift is 8 hours and the job takes 10 hours, or when the round-trip travel time to the job is too great to fit in the shift. Advantageously, an embodiment can exit scheduling 206 at any point in the second phase and still have a schedule.

Some embodiments improve scheduling efficiency by favoring the scheduling of jobs 134 that are more important than other jobs 134 according to some criterion. For example, in one scenario some jobs are mandatory 432, some jobs are not mandatory but have an approaching deadline 418, and some jobs are neither mandatory jobs nor deadline jobs but nonetheless have been assigned a higher priority 414 than some other jobs.

Any characteristics of jobs referred to herein, e.g., those identified in Figure 3 or Figure 4, are understood to be implemented as digital data in job descriptor data structures 136.

In some scenarios, jobs are sorted according to category 422, and scheduling 206 is performed (iteratively in some cases) so that mandatory jobs are scheduled (placed in a schedule) first, then deadline jobs are added to the schedule 208 if there is room, and finally other jobs are added if room for them remains in the schedule.

Some embodiments obtain 830 some job descriptions (e.g., via a network, API, file read, or GUI), calculate 812 a base travel time for each job (zero for location-agnostic jobs), determine 824 a shift, check for jobs that are infeasible because they would take too long (apply 702 filter 408), and get (706 and 708) a schedule from a scheduler 130, e.g., a constraint solver 130.

In some embodiments using a constraint solver as scheduler 130, constraints 606 are retrieved or otherwise constructed 902 and submitted to the solver 130, or constraints 606 are embedded within the solver 130, or both. Constraints 606 specify, e.g., that two jobs can't occur at the same time, that jobs are to be spaced far apart enough in time to permit travel between job locations, and that mandatory jobs must be scheduled.

Unless stated otherwise, any given claimed embodiment does not require a particular kind of scheduler 130. Various schedulers 130 utilize one or more of: constraints 606, an eligibility graph, a job group 212, location clusters, or particular algorithms such as adaptive large neighborhood search.

Unless stated otherwise, e.g., by reference to an efficiency target 602, any given claimed embodiment does not distinguish between feasible schedules and optimal schedules. However, in some embodiments the solver 130 returns a result type 622, which the embodiment checks 906. In the operation of a confidential prototype, a solver returns a value 622 representing one of: Optimal (best possible schedule), Feasible (solver found a solution but can't prove it is the best solution in the allotted amount of time), Infeasible (impossible to satisfy the constraints, for example two mandatory jobs overlap in time and require all the capability of the same resource), or Model Invalid (none of the preceding apply).

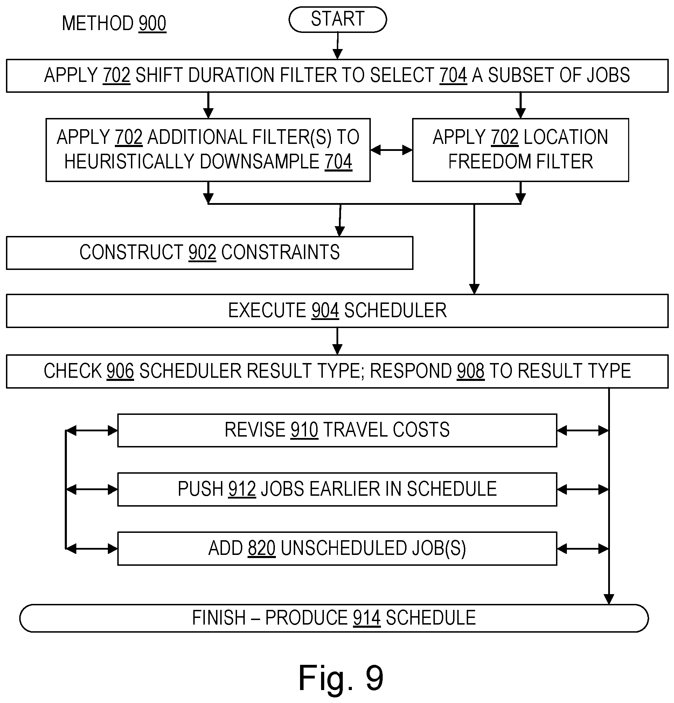

Some embodiments do different things in response to different return types 622. In response 908 to an infeasible result 622, some embodiments identify an inconsistency or conflict that prevents solution of the constraints, and notify 610 a user accordingly. In the confidential prototype, Infeasible and Model Invalid cause an exception notification to the customer or other user, whereas Optimal and Feasible continue processing, e.g., per Figure 9 after step 908. In an alternative embodiment, an Infeasible result leads to another attempt using a different filter or a different combination of filters, which leads to a different subset of jobs, or to the use of a different scheduler, or both.

In some embodiments a scheduler mechanism 130 computationally considers dependencies 326 across jobs. One example dependency 326 constrains a job J1 to be done by the same service provider (human or machine) who does another job J2. Another example dependency 326 constrains a job J3 to occur right after another job J4.

A confidential prototype embodiment sorts the jobs into categories 422, including jobs that are mandatory 432, jobs with expiring service level agreement optimization windows or other deadlines 418 for job completion, jobs with non-zero priority 414 (sorted from highest to lowest), and then all the remaining jobs of the set 210. These categories themselves can be sorted, e.g., alphabetically. The prototype lines up the jobs in the order of the categories stated above. For each job, the prototype computes a minimum travel time 440 to any other job (this is a conservative estimate of travel to the jobs). Then, the prototype computes the sum of the travel duration + minimum travel time, for each job (call this TOTAL TIME). Then the prototype computes the total amount of shift duration for the resource(s) 214. The prototype has a parameter that specifies what percent of this shift duration it should try to fill with the (TOTAL TIME), and takes all the jobs in the sorted order where TOTAL TIME < shift duration * percent and feeds them into a next step of processing (e.g., application 702 of one or more filters 218) and eventually feeds filtered jobs to a constraint solver 130. The prototype has another parameter operating as a pure cutoff 430, e.g., allowing no more than twenty jobs to be submitted 706 to the solver 130. The prototype implements a balance between including enough jobs that are important but not too many jobs that would overwhelm the constraint solver.

Applying 702 filters 218 is also referred to herein as heuristic down sampling 704. Several filters 218 are shown in Figure 4. Some other examples of heuristic down sampling perform primary or secondary sorting, computed according to one or more of: how narrow a window is when a job can be scheduled, job duration, who or what can do the job, how close the jobs are to each other, or customer data such as territory or job characteristics or how much money different types of jobs make for the customer (service provider enterprise). In some scenarios the sorting 826 is driven by machine learning 448 which measures preferences for individual customers, e.g., preferences specifying which jobs are better to include and preferences which tailor the sort 826 to a given customer.

In some embodiments, location-agnostic filtering is applied. When an embodiment considers a schedule with a location-agnostic job, it considers where the resource 214 is doing each job, and when. When a solver 130 is presented with location-agnostic jobs, in some scenarios the solver would consider every possible location 304 the job can be completed at, which is computationally expensive. Moreover, choosing a time for the location-agnostic job also potentially impacts other jobs, e.g., vehicle traffic can change due to rush hour and different properties, so it may be faster or better to travel earlier or later in the day to a job, which influences the choice for when to perform location-agnostic jobs. A resource 214 could do other location-agnostic jobs at the same location if they get there early or stay there later.

In some embodiments, a location restriction filter 412 eliminates some of the locations that would otherwise be available to the solver to designate for location-agnostic jobs, e.g., in some scenarios the location-agnostic job can't be done right before or right after the jobs at eliminated locations. A prototype performs a random sort to restrict the available set of locations, but alternatives eliminate jobs that can't be done in the same time range, or keep jobs that span a range of times over the optimization to prevent randomly losing all jobs on a given day (a loss which would prevent the location-agnostic job from being done on that day).

Some embodiments search an existing schedule to find places to add one new job at a time. Some use the location of the job or the amount of time in the gap or the job scheduled time to decide where to search in priority order of the gaps. Some do one sort, while others do multiple sorts in a nested manner.

In some scenarios, some embodiments attempt to move 912 the jobs around, earlier or later, assuming that those other bookings (the already scheduled jobs) have no promise windows and can be scheduled for any time in the shift. A goal of some embodiments in these scenarios is to find any satisfying place to add a job as quickly as possible. Some other embodiments do not assume the job can be inserted at any available time to provide equally optimal scheduling, and scheduling takes longer because the embodiment will potentially add more than one job and a goal is to make the schedule overall optimal. The confidential prototype finds all possible places that a job can fit and selects the best one based on reducing travel time, and then according to the smallest time gap that will hold the job being added, thus leaving more space for more jobs later. Then the prototype repeats this for all jobs, in order of highest job priority.

Some embodiments employ other heuristic algorithms in scheduling. Some employ an adaptive large neighborhood search (ALNS), with random search. Some employ a more directed search by looking at a map and travel between locations. Some employ additional runs of a constraint solver that will try more complicated actions that include adding new jobs, deleting existing bookings, rearranging existing bookings, etc. Some do small optimizations with a constraint solver over parts of a schedule. Some run different schedulers, e.g., a constraint solver and a statistical scheduler, and merge the resulting schedules. In addition, some embodiments parallelize any or all of the actions discussed in this disclosure.

In some scenarios, some embodiments add a new job if there is a time slot long enough to travel (or without travel if location-agnostic) from a currently scheduled job to the new job and then to the next currently scheduled job. If multiple time slots 608 exist, some embodiments choose the one with the lowest travel time and the shortest time slot. Some choose differently, e.g., the earliest slot 608, or the slot with the fewest other jobs that could fit in it because of promise window or duration and travel.

### Internet of Things

In some embodiments, the system 202 is, or includes, an embedded system such as an Internet of Things system. "IoT" or "Internet of Things" means any networked collection of addressable embedded computing or data generation or actuator nodes. An individual node is referred to as an internet of things device 101 or IoT device 101 or internet of things system 102 or IoT system 102. Such nodes are examples of computer systems 102 as defined herein, and may include or be referred to as a "smart" device, "endpoint", "chip", "label", or "tag", for example, and IoT may be referred to as a "cyber-physical system". In the phrase "embedded system" the embedding referred to is the embedding a processor and memory in a device, not the embedding of debug script in source code.

IoT nodes and systems typically have at least two of the following characteristics: (a) no local human-readable display; (b) no local keyboard; (c) a primary source of input is sensors that track sources of non-linguistic data to be uploaded from the IoT device; (d) no local rotational disk storage - RAM chips or ROM chips provide the only local memory; (e) no CD or DVD drive; (f) being embedded in a household appliance or household fixture; (g) being embedded in an implanted or wearable medical device; (h) being embedded in a vehicle; (i) being embedded in a process automation control system; or (j) a design focused on one of the following: environmental monitoring, civic infrastructure monitoring, agriculture, industrial equipment monitoring, energy usage monitoring, human or animal health or fitness monitoring, physical security, physical transportation system monitoring, object tracking, inventory control, supply chain control, fleet management, or manufacturing. IoT communications may use protocols such as TCP/IP (Transmission Control Protocol/Internet Protocol), Constrained Application Protocol (CoAP), Message Queuing Telemetry Transport (MQTT), Advanced Message Queuing Protocol (AMQP), HTTP, HTTPS, Transport Layer Security (TLS), UDP, or Simple Object Access Protocol (SOAP), for example, for wired or wireless (cellular or otherwise) communication. IoT storage or actuators or data output or control may be a target of unauthorized access, either via a cloud, via another network, or via direct local access attempts.

### Technical Character

The technical character of embodiments described herein will be apparent to one of ordinary skill in the art, and will also be apparent in several ways to a wide range of attentive readers. Some embodiments address technical activities such as authentication, encryption or decryption, caching, sending and receiving data over a computer network, and storing data in particular kinds of computing system memory, which are each an activity deeply rooted in computing technology. Some of the technical mechanisms discussed include, e.g., scheduling software 220, schedulers 130 such as constraint solvers 130, job filters 218, machine learning models 448, non-human resources 512 such as robots 504, drones 506, vehicles 508, and various machines 510, and interfaces 222. Some of the technical effects discussed include, e.g., improved security 628 from system 202 enforcement of security preferences 444 such as local processing for schedule updates 710, improved computational efficiency from withholding certain jobs via filtering 218 during a first scheduling phase 324 and then inserting 820 withheld jobs during a computationally cheaper second scheduling phase 324, improved computational efficiency from restricting 410 location-agnostic jobs to a smaller set of permitted locations 304, more efficient use of resources 214 by refinement of time granularity 316 as part of schedule updating 710, and scalable improved computational efficiency from scheduling a fleet 502 of resources 214 instead of repeating computations for individual resources. Thus, purely mental processes and activities limited to pen-and-paper are clearly excluded from the scope of any embodiment. Other advantages based on the technical characteristics of the teachings will also be apparent to one of skill from the description provided.

One of skill understands that multi-phase job scheduling as described herein is a technical activity which cannot be performed mentally at all due to API 132 usage and filter 218 execution, and cannot be performed manually with the speed and accuracy required in real-world computing systems. Hence, job scheduling improvements such as the various examples of JSEF functionality 204 described herein are improvements to computing technology and to the field of computational job scheduling, which overlaps the technical field of constraint solving. One of skill understands that attempting to manually consider a set 210 of jobs which is subject to combinatorial explosion during solver execution 904 would create unacceptable delays in job scheduling, and introduce unnecessary and unacceptable human errors and security risks. People manifestly lack the speed, accuracy, memory capacity, and specific processing capabilities required to perform multi-phase job scheduling as taught herein.

Different embodiments provide different technical benefits or other advantages in different circumstances, but one of skill informed by the teachings herein will acknowledge that particular technical advantages will likely follow from particular embodiment features or feature combinations, as noted at various points herein. Any generic or abstract aspects are integrated into a practical application such as business application platform tools, business empowerment tools, scheduling services, field service schedule boards, or other personnel or resource management tools.

Some embodiments described herein may be viewed by some people in a broader context. For instance, concepts such as efficiency, reliability, user satisfaction, or waste may be deemed relevant to a particular embodiment. However, it does not follow from the availability of a broad context that exclusive rights are being sought herein for abstract ideas; they are not. In particular, no claim is made to job scheduling per se, as opposed to the particular job scheduling methods, systems, data structures, and configured storage devices described and claimed in the eventual final claims based on the present disclosure.

Rather, the present disclosure is focused on providing appropriately specific embodiments whose technical effects fully or partially solve particular technical problems, such as: how to improve the efficiency of job scheduling by technical improvements (e.g., multi-phase 324 scheduling, granularity 316 refinement, different handling of location-agnostic 312 jobs), as opposed to administrative changes; how to optimally account for location-agnostic jobs when generating a schedule that also schedules location-specific jobs (e.g., identifying them in the job descriptor 136, restricting 410 their allowed locations, withholding them for second phase insertion); how to optimally sort jobs for submission to a black box scheduling mechanism (e.g., by applying one or more filters 218); and how to balance a scheduling workload between a constraint satisfaction solver and other scheduling mechanisms (e.g., by applying filters 218, by withholding jobs for second phase insertion 820). Other configured storage media, systems, and processes involving efficiency, reliability, user satisfaction, or waste are outside the present scope. Accordingly, vagueness, mere abstractness, lack of technical character, and accompanying proof problems are also avoided under a proper understanding of the present disclosure.

### Additional Combinations and Variations

Any of these combinations of software code, data structures, logic, components, communications, and/or their functional equivalents may also be combined with any of the systems and their variations described above. A process may include any steps described herein in any subset or combination or sequence which is operable. Each variant may occur alone, or in combination with any one or more of the other variants. Each variant may occur with any of the processes and each process may be combined with any one or more of the other processes. Each process or combination of processes, including variants, may be combined with any of the configured storage medium combinations and variants described above.

More generally, one of skill will recognize that not every part of this disclosure, or any particular details therein, are necessarily required to satisfy legal criteria such as enablement, written description, or best mode. Also, embodiments are not limited to the particular scenarios, language models, prompts, motivating examples, operating environments, tools, peripherals, software process flows, identifiers, repositories, data structures, data selections, naming conventions, notations, control flows, or other implementation choices described herein. Any apparent conflict with any other patent disclosure, even from the owner of the present subject matter, has no role in interpreting the claims presented in this patent disclosure.

### Acronyms, abbreviations, names, and symbols

Some acronyms, abbreviations, names, and symbols are defined below. Others are defined elsewhere herein, or do not require definition here in order to be understood by one of skill.
ALU: arithmetic and logic unit
API: application program interface
BIOS: basic input/output system
CD: compact disc
CLI: command line interface, command line interpreter
CPU: central processing unit
DVD: digital versatile disk or digital video disc
FPGA: field-programmable gate array
FPU: floating point processing unit
GDPR: General Data Protection Regulation
GPU: graphical processing unit
GUI: graphical user interface
HTTPS: hypertext transfer protocol, secure
IaaS or IAAS: infrastructure-as-a-service
LAN: local area network
OS: operating system
PaaS or PAAS: platform-as-a-service
RAM: random access memory
ROM: read only memory
TPU: tensor processing unit
UEFI: Unified Extensible Firmware Interface
UI: user interface
WAN: wide area network

### Some Additional Terminology

Reference is made herein to exemplary embodiments such as those illustrated in the drawings, and specific language is used herein to describe the same. But alterations and further modifications of the features illustrated herein, and additional technical applications of the abstract principles illustrated by particular embodiments herein, which would occur to one skilled in the relevant art(s) and having possession of this disclosure, should be considered within the scope of the claims.

The meaning of terms is clarified in this disclosure, so the claims should be read with careful attention to these clarifications. Specific examples are given, but those of skill in the relevant art(s) will understand that other examples may also fall within the meaning of the terms used, and within the scope of one or more claims. Terms do not necessarily have the same meaning here that they have in general usage (particularly in non-technical usage), or in the usage of a particular industry, or in a particular dictionary or set of dictionaries. Reference numerals may be used with various phrasings, to help show the breadth of a term. Sharing a reference numeral does not mean necessarily sharing every aspect, feature, or limitation of every item referred to using the reference numeral. Omission of a reference numeral from a given piece of text does not necessarily mean that the content of a Figure is not being discussed by the text. The present disclosure asserts and exercises the right to specific and chosen lexicography. Quoted terms are being defined explicitly, but a term may also be defined implicitly without using quotation marks. Terms may be defined, either explicitly or implicitly, here in the Detailed Description and/or elsewhere in the application file.

A "computer system" (a.k.a. "computing system") may include, for example, one or more servers, motherboards, processing nodes, laptops, tablets, personal computers (portable or not), personal digital assistants, smartphones, smartwatches, smart bands, cell or mobile phones, other mobile devices having at least a processor and a memory, video game systems, augmented reality systems, holographic projection systems, televisions, wearable computing systems, and/or other device(s) providing one or more processors controlled at least in part by instructions. The instructions may be in the form of firmware or other software in memory and/or specialized circuitry.

A "multithreaded" computer system is a computer system which supports multiple execution threads. The term "thread" should be understood to include code capable of or subject to scheduling, and possibly to synchronization. A thread may also be known outside this disclosure by another name, such as "task," "process," or "coroutine," for example. However, a distinction is made herein between threads and processes, in that a thread defines an execution path inside a process. Also, threads of a process share a given address space, whereas different processes have different respective address spaces. The threads of a process may run in parallel, in sequence, or in a combination of parallel execution and sequential execution (e.g., time-sliced).

A "processor" is a thread-processing unit, such as a core in a simultaneous multithreading implementation. A processor includes hardware. A given chip may hold one or more processors. Processors may be general purpose, or they may be tailored for specific uses such as vector processing, graphics processing, signal processing, floating-point arithmetic processing, encryption, I/O processing, machine learning, and so on.

"Kernels" include operating systems, hypervisors, virtual machines, BIOS or UEFI code, and similar hardware interface software.

"Code" means processor instructions, data (which includes constants, variables, and data structures), or both instructions and data. "Code" and "software" are used interchangeably herein. Executable code, interpreted code, and firmware are some examples of code.

"Program" is used broadly herein, to include applications, kernels, drivers, interrupt handlers, firmware, state machines, libraries, and other code written by programmers (who are also referred to as developers) and/or automatically generated.

A "routine" is a callable piece of code which normally returns control to an instruction just after the point in a program execution at which the routine was called. Depending on the terminology used, a distinction is sometimes made elsewhere between a "function" and a "procedure": a function normally returns a value, while a procedure does not. As used herein, "routine" includes both functions and procedures. A routine may have code that returns a value (e.g., sin(x)) or it may simply return without also providing a value (e.g., void functions).

"Service" as a noun means a consumable program offering, in a cloud computing environment or other network or computing system environment, which provides resources to multiple programs or provides resource access to multiple programs, or does both. A service implementation may itself include multiple applications or other programs.

"Cloud" means pooled resources for computing, storage, and networking which are elastically available for measured on-demand service. A cloud may be private, public, community, or a hybrid, and cloud services may be offered in the form of infrastructure as a service (IaaS), platform as a service (PaaS), software as a service (SaaS), or another service. Unless stated otherwise, any discussion of reading from a file or writing to a file includes reading/writing a local file or reading/writing over a network, which may be a cloud network or other network, or doing both (local and networked read/write). A cloud may also be referred to as a "cloud environment" or a "cloud computing environment".

"Access" to a computational resource includes use of a permission or other capability to read, modify, write, execute, move, delete, create, or otherwise utilize the resource. Attempted access may be explicitly distinguished from actual access, but "access" without the "attempted" qualifier includes both attempted access and access actually performed or provided.

Herein, activity by a user refers to activity by a user device or activity by a user account or user session, or by software on behalf of a user, or by hardware on behalf of a user. Activity is represented by digital data or machine operations or both in a computing system. Activity within the scope of any claim based on the present disclosure excludes human actions per se. Software or hardware activity "on behalf of a user" accordingly refers to software or hardware activity on behalf of a user device or on behalf of a user account or a user session or on behalf of another computational mechanism or computational artifact, and thus does not bring human behavior per se within the scope of any embodiment or any claim.

"Digital data" means data in a computing system, as opposed to data written on paper or thoughts in a person's mind, for example. Similarly, "digital memory" refers to a non-living device, e.g., computing storage hardware, not to human or other biological memory.

As used herein, "include" allows additional elements (i.e., includes means comprises) unless otherwise stated.

"Optimize" means to improve, not necessarily to perfect. For example, it may be possible to make further improvements in a program or an algorithm which has been optimized.

"Process" is sometimes used herein as a term of the computing science arts, and in that technical sense encompasses computational resource users, which may also include or be referred to as coroutines, threads, tasks, interrupt handlers, application processes, kernel processes, procedures, or object methods, for example. As a practical matter, a "process" is the computational entity identified by system utilities such as Windows^{®} Task Manager, Linux^{®} ps, or similar utilities in other operating system environments (marks of Microsoft Corporation, Linus Torvalds, respectively). "Process" may also be used as a patent law term of art, e.g., in describing a process claim as opposed to a system claim or an article of manufacture (configured storage medium) claim. Similarly, "method" is used herein primarily as a technical term in the computing science arts (a kind of "routine") but it is also a patent law term of art (akin to a "method"). "Process" and "method" in the patent law sense are used interchangeably herein. Those of skill will understand which meaning is intended in a particular instance, and will also understand that a given claimed process or method (in the patent law sense) may sometimes be implemented using one or more processes or methods (in the computing science sense).

"Automatically" means by use of automation (e.g., general purpose computing hardware configured by software for specific operations and technical effects discussed herein), as opposed to without automation. In particular, steps performed "automatically" are not performed by hand on paper or in a person's mind, although they may be initiated by a human person or guided interactively by a human person. Automatic steps are performed with a machine in order to obtain one or more technical effects that would not be realized without the technical interactions thus provided. Steps performed automatically are presumed to include at least one operation performed proactively.

One of skill understands that technical effects are the presumptive purpose of a technical embodiment. The mere fact that calculation is involved in an embodiment, for example, and that some calculations can also be performed without technical components (e.g., by paper and pencil, or even as mental steps) does not remove the presence of the technical effects or alter the concrete and technical nature of the embodiment, particularly in real-world embodiment implementations. JSEF operations such as obtaining 830 a job 134, applying 702 a filter 218, receiving 708 a schedule 208, updating 710 a schedule 208, sorting 826 jobs 134, choosing 816 a scheduler 130, restricting 410 a job 134 to certain location(s) 304, classifying 808 a job 134, categorizing 422 a job 134, and many other operations discussed herein (whether recited expressly in the Figures or not), are understood to be inherently digital and computational. A human mind cannot interface directly with a CPU or other processor, or with RAM or other digital storage, to read and write the necessary data to perform the JSEF steps 800 taught herein even in a hypothetical situation or a prototype situation, much less in an embodiment's real world large computing environment, e.g., an internet-connected environment. This would all be well understood by persons of skill in the art in view of the present disclosure. Moreover, one of skill understands that JSEF functionality 204 cannot be implemented merely with conventional tools and steps, because actual implementation requires the use of teachings which were first provided in the present disclosure, e.g., teachings that support the recited technical effects.

"Computationally" likewise means a computing device (processor plus memory, at least) is being used, and excludes obtaining a result by mere human thought or mere human action alone. For example, doing arithmetic with a paper and pencil is not doing arithmetic computationally as understood herein. Computational results are faster, broader, deeper, more accurate, more consistent, more comprehensive, and/or otherwise provide technical effects that are beyond the scope of human performance alone. "Computational steps" are steps performed computationally. Neither "automatically" nor "computationally" necessarily means "immediately". "Computationally" and "automatically" are used interchangeably herein.

"Proactively" means without a direct request from a user, and indicates machine activity rather than human activity. Indeed, a user may not even realize that a proactive step by an embodiment was possible until a result of the step has been presented to the user. Except as otherwise stated, any computational and/or automatic step described herein may also be done proactively.

"Based on" means based on at least, not based exclusively on. Thus, a calculation based on X depends on at least X, and may also depend on Y.

Throughout this document, use of the optional plural "(s)", "(es)", or "(ies)" means that one or more of the indicated features is present. For example, "processor(s)" means "one or more processors" or equivalently "at least one processor".

"At least one" of a list of items means one of the items, or two of the items, or three of the items, and so on up to and including all N of the items, where the list is a list of N items. The presence of an item in the list does not require the presence of the item (or a check for the item) in an embodiment. For instance, if an embodiment of a system is described herein as including at least one of A, B, C, or D, then a system that includes A but does not check for B or C or D is an embodiment, and so is a system that includes A and also includes B but does not include or check for C or D. Similar understandings pertain to items which are steps or step portions or options in a method embodiment. This is not a complete list of all possibilities; it is provided merely to aid understanding of the scope of "at least one" that is intended herein.

For the purposes of United States law and practice, use of the word "step" herein, in the claims or elsewhere, is not intended to invoke means-plus-function, step-plus-function, or 35 United State Code Section 112 Sixth Paragraph / Section 112(f) claim interpretation. Any presumption to that effect is hereby explicitly rebutted.

For the purposes of United States law and practice, the claims are not intended to invoke means-plus-function interpretation unless they use the phrase "means for". Claim language intended to be interpreted as means-plus-function language, if any, will expressly recite that intention by using the phrase "means for". When means-plus-function interpretation applies, whether by use of "means for" and/or by a court's legal construction of claim language, the means recited in the specification for a given noun or a given verb should be understood to be linked to the claim language and linked together herein by virtue of any of the following: appearance within the same block in a block diagram of the figures, denotation by the same or a similar name, denotation by the same reference numeral, a functional relationship depicted in any of the figures, a functional relationship noted in the present disclosure's text. For example, if a claim limitation recited a "zac widget" and that claim limitation became subject to means-plus-function interpretation, then at a minimum all structures identified anywhere in the specification in any figure block, paragraph, or example mentioning "zac widget", or tied together by any reference numeral assigned to a zac widget, or disclosed as having a functional relationship with the structure or operation of a zac widget, would be deemed part of the structures identified in the application for zac widgets and would help define the set of equivalents for zac widget structures.

One of skill will recognize that this disclosure discusses various data values and data structures, and recognize that such items reside in a memory (RAM, disk, etc.), thereby configuring the memory. One of skill will also recognize that this disclosure discusses various algorithmic steps which are to be embodied in executable code in a given implementation, and that such code also resides in memory, and that it effectively configures any general-purpose processor which executes it, thereby transforming it from a general-purpose processor to a special-purpose processor which is functionally special-purpose hardware.

Accordingly, one of skill would not make the mistake of treating as nonoverlapping items (a) a memory recited in a claim, and (b) a data structure or data value or code recited in the claim. Data structures and data values and code are understood to reside in memory, even when a claim does not explicitly recite that residency for each and every data structure or data value or piece of code mentioned. Accordingly, explicit recitals of such residency are not required. However, they are also not prohibited, and one or two select recitals may be present for emphasis, without thereby excluding all the other data values and data structures and code from residency. Likewise, code functionality recited in a claim is understood to configure a processor, regardless of whether that configuring quality is explicitly recited in the claim.

Throughout this document, unless expressly stated otherwise any reference to a step in a process presumes that the step may be performed directly by a party of interest and/or performed indirectly by the party through intervening mechanisms and/or intervening entities, and still lie within the scope of the step. That is, direct performance of the step by the party of interest is not required unless direct performance is an expressly stated requirement. For example, a computational step on behalf of a party of interest, such as adhering, applying, categorizing, choosing, classifying, configuring, determining, excluding from a set, filtering, including in a set, inserting, learning, obtaining, performing, prioritizing, providing, receiving, scheduling, selecting, sorting, submitting, triggering, updating (and adheres, adhered, applies, applied, etc.) with regard to a destination or other subject may involve intervening action, such as the foregoing or such as forwarding, copying, uploading, downloading, encoding, decoding, compressing, decompressing, encrypting, decrypting, authenticating, invoking, and so on by some other party or mechanism, including any action recited in this document, yet still be understood as being performed directly by or on behalf of the party of interest. Example verbs listed here may overlap in meaning or even be synonyms; separate verb names do not dictate separate functionality in every case.

Whenever reference is made to data or instructions, it is understood that these items configure a computer-readable memory and/or computer-readable storage medium, thereby transforming it to a particular article, as opposed to simply existing on paper, in a person's mind, or as a mere signal being propagated on a wire, for example. For the purposes of patent protection in the United States, a memory or other storage device or other computer-readable storage medium is not a propagating signal or a carrier wave or mere energy outside the scope of patentable subject matter under United States Patent and Trademark Office (USPTO) interpretation of the In re Nuijten case. No claim covers a signal per se or mere energy in the United States, and any claim interpretation that asserts otherwise in view of the present disclosure is unreasonable on its face. Unless expressly stated otherwise in a claim granted outside the United States, a claim does not cover a signal per se or mere energy.

Moreover, notwithstanding anything apparently to the contrary elsewhere herein, a clear distinction is to be understood between (a) computer readable storage media and computer readable memory, on the one hand, and (b) transmission media, also referred to as signal media, on the other hand. A transmission medium is a propagating signal or a carrier wave computer readable medium. By contrast, computer readable storage media and computer readable memory and computer readable storage devices are not propagating signal or carrier wave computer readable media. Unless expressly stated otherwise in the claim, "computer readable medium" means a computer readable storage medium, not a propagating signal per se and not mere energy.

An "embodiment" herein is an example. The term "embodiment" is not interchangeable with "the invention". Embodiments may freely share or borrow aspects to create other embodiments (provided the result is operable), even if a resulting combination of aspects is not explicitly described per se herein. Requiring each and every permitted combination to be explicitly and individually described is unnecessary for one of skill in the art, and would be contrary to policies which recognize that patent specifications are written for readers who are skilled in the art. Formal combinatorial calculations and informal common intuition regarding the number of possible combinations arising from even a small number of combinable features will also indicate that a large number of aspect combinations exist for the aspects described herein. Accordingly, requiring an explicit recitation of each and every combination would be contrary to policies calling for patent specifications to be concise and for readers to be knowledgeable in the technical fields concerned.

### Remarks Regarding Reference Numerals

Reference numerals are provided for convenience and in support of the drawing figures and as part of the text of the specification, which collectively describe aspects of embodiments by reference to multiple items. Items which do not have a unique reference numeral may nonetheless be part of a given embodiment. For better legibility of the text, a given reference numeral is recited near some, but not all, recitations of the referenced item in the text. The same reference numeral may be used with reference to different examples or different instances of a given item.

The following remarks pertain to particular reference numerals:
100 operating environment, also referred to as computing environment; includes one or more systems 102
101 machine in a system 102, e.g., any device having at least a processor 110 and having a distinct identifier such as an IP address or a MAC (media access control) address; may be a physical machine or be a virtual machine implemented on physical hardware
102 computer system, also referred to as a "computational system" or "computing system", and when in a network may be referred to as a "node"
104 users, e.g., user of an enhanced system 202
106 peripheral device
108 network generally, including, e.g., LANs, WANs, software-defined networks, clouds, and other wired or wireless networks
110 processor or non-empty set of processors; includes hardware
112 computer-readable storage medium, e.g., RAM, hard disks; also referred to as storage device
114 removable configured computer-readable storage medium
116 instructions executable with processor; may be on removable storage media or in other memory (volatile or nonvolatile or both)
118 digital data in a system 102; data structures, values, source code, and other examples are discussed herein
120 kernel(s), e.g., operating system(s), BIOS, UEFI, device drivers; also refers to an execution engine such as a language runtime
122 software tools, software applications, scheduling software 220, security controls; hardware tools; computational
124 cloud, also referred to as cloud environment or cloud computing environment
126 display screens, also referred to as "displays"
128 computing hardware not otherwise associated with a reference numeral 106, 108, 110, 112, 114
132 application program interface (API), e.g., to a scheduler 130
134 job, as represented in a computing system, e.g., by a job descriptor data structure 136 or by other data 118
202 enhanced computing system, i.e., system 102 enhanced with functionality 204 as taught herein
204 job scheduling functionality (also referred to as JSEF functionality 204, or functionality 204, or enhancement 204), e.g., software or specialized hardware which performs or is configured to perform steps 704, 706, 708, and 710, or steps 702, 706, and 708, or any software or hardware which performs or is configured to perform a job scheduling enhancement activity first disclosed herein, or to perform a novel method 800 first disclosed herein
220 job scheduling software, e.g., software which withholds a filtered job from submission to a scheduler and then uses a less computationally complex algorithm than the scheduler algorithm to add the withheld job to the schedule received from the scheduler, or any software configured to perform a method 800 upon execution
700 flowchart; 700 also refers to job scheduling methods that are illustrated by or consistent with the Figure 7 flowchart or any variation of the Figure 7 flowchart described herein; all job scheduling method steps are computational, not human activity
800 flowchart; 800 also refers to job scheduling methods that are illustrated by or consistent with the Figure 8 flowchart, which incorporates the Figure 7 flowchart, the Figure 9 flowchart, the steps implicit or express in Figures 1 through 6, and all other steps taught herein, or methods that are illustrated by or consistent with any variation of the Figure 8 flowchart described herein; all job scheduling method steps are computational, not human activity, and all items computed or computationally access in those steps are digital, e.g., jobs 134 are digital representations of real-world jobs, locations 304 are digital representations of real-world locations, and so on
828 any step or item discussed in the present disclosure that has not been assigned some other reference numeral; 828 may thus be shown expressly as a reference numeral for various steps or items or both, and may be added as a reference numeral (in the current disclosure or any subsequent patent application which claims priority to the current disclosure) for various steps or items or both without thereby adding new matter
900 flowchart; 900 also refers to job scheduling methods that are illustrated by or consistent with the Figure 9 flowchart or any variation of the Figure 9 flowchart described herein; all job scheduling method steps are computational, not human activity

### Conclusion

Some embodiments provide or utilize a job scheduling technology 204 which computationally selects 704 jobs 134 from a set 210, excluding 806 at least one job by applying 702 at least one job filter 218, submits 706 the selected jobs to a scheduler mechanism 130, receives 708 in response a first phase schedule 208, and produces 914 a second phase schedule 208 by updating 710 the first phase schedule to include 804 at least one excluded job 134. The update 710 avoids computational costs of combinatorial explosion. In some scenarios, a location-agnostic 312 job 134 is excluded 806 from the first phase schedule 208 and then included 804 in the updated schedule 208. In some scenarios, applying 702 one or more of the filters 218 sorts 826 the jobs for submission 706 to the scheduler mechanism 130.

Embodiments are understood to also themselves include or benefit from tested and appropriate security controls and privacy controls such as the General Data Protection Regulation (GDPR). Use of the tools and techniques taught herein can be used together with such controls.

Although Microsoft technology is used in some motivating examples, the teachings herein are not limited to use in technology supplied or administered by Microsoft. Under a suitable license, for example, the present teachings could be embodied in software or services provided by other cloud service providers.

Although particular embodiments are expressly illustrated and described herein as processes, as configured storage media, or as systems, it will be appreciated that discussion of one type of embodiment also generally extends to other embodiment types. For instance, the descriptions of processes in connection with the Figures also help describe configured storage media, and help describe the technical effects and operation of systems and manufactures like those discussed in connection with other Figures. It does not follow that any limitations from one embodiment are necessarily read into another. In particular, processes are not necessarily limited to the data structures and arrangements presented while discussing systems or manufactures such as configured memories.

Those of skill will understand that implementation details may pertain to specific code, such as specific thresholds, comparisons, specific kinds of platforms or programming languages or architectures, specific scripts or other tasks, and specific computing environments, and thus need not appear in every embodiment. Those of skill will also understand that program identifiers and some other terminology used in discussing details are implementation-specific and thus need not pertain to every embodiment. Nonetheless, although they are not necessarily required to be present here, such details may help some readers by providing context and/or may illustrate a few of the many possible implementations of the technology discussed herein.

With due attention to the items provided herein, including technical processes, technical effects, technical mechanisms, and technical details which are illustrative but not comprehensive of all claimed or claimable embodiments, one of skill will understand that the present disclosure and the embodiments described herein are not directed to subject matter outside the technical arts, or to any idea of itself such as a principal or original cause or motive, or to a mere result per se, or to a mental process or mental steps, or to a business method or prevalent economic practice, or to a mere method of organizing human activities, or to a law of nature per se, or to a naturally occurring thing or process, or to a living thing or part of a living thing, or to a mathematical formula per se, or to isolated software per se, or to a merely conventional computer, or to anything wholly imperceptible or any abstract idea per se, or to insignificant post-solution activities, or to any method implemented entirely on an unspecified apparatus, or to any method that fails to produce results that are useful and concrete, or to any preemption of all fields of usage, or to any other subject matter which is ineligible for patent protection under the laws of the jurisdiction in which such protection is sought or is being licensed or enforced.

Reference herein to an embodiment having some feature X and reference elsewhere herein to an embodiment having some feature Y does not exclude from this disclosure embodiments which have both feature X and feature Y, unless such exclusion is expressly stated herein. All possible negative claim limitations are within the scope of this disclosure, in the sense that any feature which is stated to be part of an embodiment may also be expressly removed from inclusion in another embodiment, even if that specific exclusion is not given in any example herein. The term "embodiment" is merely used herein as a more convenient form of "process, system, article of manufacture, configured computer readable storage medium, and/or other example of the teachings herein as applied in a manner consistent with applicable law." Accordingly, a given "embodiment" may include any combination of features disclosed herein, provided the embodiment is consistent with at least one claim.

Not every item shown in the Figures need be present in every embodiment. Conversely, an embodiment may contain item(s) not shown expressly in the Figures. Although some possibilities are illustrated here in text and drawings by specific examples, embodiments may depart from these examples. For instance, specific technical effects or technical features of an example may be omitted, renamed, grouped differently, repeated, instantiated in hardware and/or software differently, or be a mix of effects or features appearing in two or more of the examples. Functionality shown at one location may also be provided at a different location in some embodiments; one of skill recognizes that functionality modules can be defined in various ways in a given implementation without necessarily omitting desired technical effects from the collection of interacting modules viewed as a whole. Distinct steps may be shown together in a single box in the Figures, due to space limitations or for convenience, but nonetheless be separately performable, e.g., one may be performed without the other in a given performance of a method.

Reference has been made to the figures throughout by reference numerals. Any apparent inconsistencies in the phrasing associated with a given reference numeral, in the figures or in the text, should be understood as simply broadening the scope of what is referenced by that numeral. Different instances of a given reference numeral may refer to different embodiments, even though the same reference numeral is used. Similarly, a given reference numeral may be used to refer to a verb, a noun, and/or to corresponding instances of each, e.g., a processor 110 may process 110 instructions by executing them.

As used herein, terms such as "a", "an", and "the" are inclusive of one or more of the indicated item or step. In particular, in the claims a reference to an item generally means at least one such item is present and a reference to a step means at least one instance of the step is performed. Similarly, "is" and other singular verb forms should be understood to encompass the possibility of "are" and other plural forms, when context permits, to avoid grammatical errors or misunderstandings.

Headings are for convenience only; information on a given topic may be found outside the section whose heading indicates that topic.

All claims and the abstract, as filed, are part of the specification. The abstract is provided for convenience and for compliance with patent office requirements; it is not a substitute for the claims and does not govern claim interpretation in the event of any apparent conflict with other parts of the specification. Similarly, the summary is provided for convenience and does not govern in the event of any conflict with the claims or with other parts of the specification. Claim interpretation shall be made in view of the specification as understood by one of skill in the art; it is not required to recite every nuance within the claims themselves as though no other disclosure was provided herein.

To the extent any term used herein implicates or otherwise refers to an industry standard, and to the extent that applicable law requires identification of a particular version of such as standard, this disclosure shall be understood to refer to the most recent version of that standard which has been published in at least draft form (final form takes precedence if more recent) as of the earliest priority date of the present disclosure under applicable patent law.

While exemplary embodiments have been shown in the drawings and described above, it will be apparent to those of ordinary skill in the art that numerous modifications can be made without departing from the principles and concepts set forth in the claims, and that such modifications need not encompass an entire abstract concept. Although the subject matter is described in language specific to structural features and/or procedural acts, it is to be understood that the subject matter defined in the appended claims is not necessarily limited to the specific technical features or acts described above the claims. It is not necessary for every means or aspect or technical effect identified in a given definition or example to be present or to be utilized in every embodiment. Rather, the specific features and acts and effects described are disclosed as examples for consideration when implementing the claims.

All changes which fall short of enveloping an entire abstract idea but come within the meaning and range of equivalency of the claims are to be embraced within their scope to the full extent permitted by law.

In examples there is a computer-readable storage medium (114) configured with data (118) and instructions (116) which upon execution by a processor (110) perform a job scheduling method (800), the method performed by a computing system (102), the method comprising:
forming a forming a nonempty subset (318) of selected (308) jobs by selecting multiple jobs from a set of jobs, the selecting comprising excluding (806) from the subset at least a first job of the set by applying (702) at least a first job filter (218) and excluding (806) from the subset at least a second job of the set by applying (702) at least a second job filter (218);
submitting (706) the subset of selected jobs to a scheduler (130) via an application program interface (132);
receiving (708) from the scheduler via the application program interface a first phase schedule (208) which specifies scheduled jobs; and
producing (914) a second phase schedule at least by updating (710) the first phase schedule to include at least the first job or the second job.

The computer-readable storage medium described above, wherein the selecting comprises sorting (826) jobs according to a weighted combination (620) of at least three of: a job deadline (418), a job priority (414), a job expected duration (442), or a travel time estimate (438).

The computer-readable storage medium described above, wherein selecting multiple jobs comprises the computing system applying (702) a job categories filter (424) which constrains the subset according to an ordering (472) of job categories (422), and at least one of the job categories represents at least one of:
whether a job is mandatory (432);
whether a job has a deadline (418);
whether a job has a nonzero priority (414);
a territory (320) containing a physical location (304) of a job; or
whether a resource group (212), which identifies at least one resource (214) which has a capability (460) to perform at least a portion of a job, identifies more than one resource.

The computer-readable storage medium described above, wherein the selecting comprises at least one of:
applying (702) a maximum job count filter (430) which constrains the subset to include at most a maximum number of jobs; or
applying (702) a maximum location-agnostic job count filter (458) which constrains the subset to include at most a maximum number of location-agnostic jobs.

The computer-readable storage medium described above, wherein the selecting comprises at least one of:
applying (702) a promise window filter (470) which is configured to computationally filter a job according to whether the job has a promise window (468);
applying (702) a capability filter (462) which is configured to computationally filter a job according to a capability (460) which is designated as a requirement (466) to perform at least a portion of the job; or
applying (702) a capability filter (462) which is configured to computationally filter a job according to a capability (460) which is designated as an aid (464) to perform at least a portion of the job.

## Claims

1. A computing system (202) configured for job scheduling (206), the computing system comprising:
a digital memory (112) containing one or more data structures (136) which correspond to a nonempty set of jobs (134), each job of the set having a resource group (212) identifying at least one resource (214) which has a capability (460) to perform at least a portion of the job, each job of the set having an expected job duration (442), each job of the set classified as either location-agnostic (312) or location-specific (310), each location-specific job specifying a physical location (304), at least one job of the set classified as location-agnostic;
a nonempty set (216) of job filters (218) executable by the computing system;
a processor in operable communication with the digital memory, the processor configured to execute a job scheduling method (800), the method comprising: (a) forming a nonempty subset (318) of selected (308) jobs by selecting multiple jobs from the set of jobs, the selecting comprising excluding (806) from the subset at least one job by applying (702) at least one of the job filters, (b) submitting (706) the subset of selected jobs to a scheduler (130) via an application program interface (132), (c) receiving (708) from the scheduler via the application program interface a first phase schedule (208) which specifies scheduled jobs, and (d) producing (914) a second phase schedule (208) at least by updating (710) the first phase schedule to include (804) at least one job which was excluded by applying at least one of the job filters.

2. The computing system of claim 1, wherein the set (216) of job filters (218) comprises at least one of:
a location freedom filter (402) which is configured to computationally filter in location-specific jobs or to computationally filter out location-agnostic jobs, or to do both;
a shift duration filter (408) which is configured to computationally filter in jobs for which the expected job duration plus a travel time estimate (438) does not exceed a shift duration (406), or to computationally filter out jobs for which the expected job duration plus a travel time estimate does exceed a shift duration, or to do both;
a mandatory job filter (434) which is configured to computationally filter in jobs which are mandatory (432) or to computationally filter out jobs which are not mandatory, or to do both; or
a deadline job filter (420) which is configured to computationally filter in jobs which have a deadline (418) or to computationally filter out jobs which do not have a deadline, or to do both.

3. The computing system of claim 1 or claim 2, wherein the computing system is configured to schedule a fleet (502) of resources (214) to collectively perform (802) at least a majority of the set of jobs.

4. The computing system of any of claims 1 to 3, wherein the computing system is further configured to proactively trigger (810) at least one resource (214) to perform (802) at least one job according to the second phase schedule (208).

5. The computing system of any of claims 1 to 4, wherein the resource group (212) identifies at least one of:
a physical robot (504);
a physical drone (506);
a self-driving vehicle (508);
a physical machine (510); or
a non-human (512) physical resource (214).

6. A scheduling method (800) which is performed by a computing system (102), the computing system comprising a processor (110) and a memory (112) in operable communication with the processor, the method comprising the computing system:
obtaining (830), in the memory, one or more job descriptor data structures (136) which correspond to a nonempty set of jobs (134), each job of the set having an expected job duration (442);
classifying (808) multiple jobs of the set as respectively either location-agnostic (312) or location-specific (310), each location-specific job specifying a physical location (304), the classifying comprising classifying at least one job of the set as location-agnostic;
forming a nonempty subset (318) of selected jobs by selecting (704) multiple jobs of the set, the selecting comprising applying (702) a location freedom filter (402) which is configured to computationally filter in location-specific jobs or to computationally filter out location-agnostic jobs or to do both, the applying comprising including (804) in the subset at least one location-specific job of the set and excluding (806) from the subset at least one location-agnostic job of the set;
submitting (706) the subset of selected jobs to a scheduler (130) via an application program interface (132);
receiving (708) from the scheduler via the application program interface a first phase schedule (208) which specifies scheduled jobs; and
producing (914) a second phase schedule (208) at least by updating (710) the first phase schedule to include (804) at least one location-agnostic job which was excluded by applying the location freedom filter.

7. The method of claim 6, wherein updating the first phase schedule (208) comprises the computing system:
applying (702) a location restriction filter (412) to a particular location-agnostic job, thereby restricting (410) the particular location-agnostic job to a nonempty proper subset of physical locations (304) which have scheduled jobs in the first phase schedule;
submitting (706) the first phase schedule (208), the particular location-agnostic job, and the subset of physical locations to the scheduler (130) via the application program interface; and
receiving (708) the second phase schedule (208) from the scheduler via the application program interface.

8. The method of claim 6 or claim 7, wherein selecting (704) multiple jobs comprises the computing system performing at least one of:
applying (702) a maximum job count filter (430) which constrains the subset to include at most a maximum number of jobs;
applying (702) a job categories filter (424) which constrains the subset according to an ordering of job categories (422); or
applying (702) a job priorities filter (416) which constrains the subset according to job priorities (414).

9. The method of any of claims 6 to 8, further comprising the computing system:
calculating (812) a base travel time (440) for a location-specific job, wherein the base travel time is calculated as a minimum of estimated travel times (438) to the location-specific job from other location-specific jobs in the set of jobs;
setting (812) the base travel time to zero for a location-agnostic job;
determining (824) a shift (404) which has a start time and an end time, the shift having a shift duration (406) which is greater than zero; and
applying (702) a shift duration filter (408) to at least a portion of the set of jobs prior to submitting the subset of selected jobs to the scheduler, wherein applying the shift duration filter comprises removing (806) from the set of jobs a job for which the expected job duration plus the base travel time is greater than the shift duration.

10. The method of any of claims 6 to 9, comprising the computing system:
calculating (812) a base travel time (440) for a location-specific job, wherein the base travel time is calculated as a minimum of estimated travel times (438) to the location-specific job from other location-specific jobs in the set of jobs, wherein the location-specific job is in the subset of selected jobs, and wherein the base travel time for the job adhered to a first granularity (316) when the subset of selected jobs was submitted to the scheduler; and
producing (914) the second phase schedule at least by revising (910) the base travel time for the location-specific job to adhere to a second granularity (316), the second granularity being finer than the first granularity.

11. The method of any of claims 6 to 10, further comprising at least one of:
choosing (816) the scheduler from a set of at least two schedulers, the choosing computed from at least an efficiency target (602); or
providing (818) an efficiency target (602) to the scheduler via the application program interface.

12. The method of any of claims 6 to 11, wherein updating the first phase schedule comprises inserting (820) the at least one location-agnostic job in at least one of:
a gap (608) in the first phase schedule which is not occupied by any scheduled job;
a travel time period (624) to a scheduled job; or
a travel time period (624) from a scheduled job.

13. The method of any of claims 6 to 12, further comprising configuring (822) a user interface (616) of the computing system with a notification (610), the notification comprising at least one of:
a rationale (612) for excluding a particular job from at least one of the schedules; or
a rationale (612) for including a particular job in at least one of the schedules.

14. The method of any of claims 6 to 13, further comprising the computing system:
determining (824) a shift (404) which has a start time and an end time, the shift having a shift duration (406) which is greater than zero, the shift duration computed at least from a battery (516) life of a battery-powered machine (510); and
applying (702) a shift duration filter (408) to at least a portion of the set of jobs prior to submitting the subset of selected jobs to the scheduler, wherein applying the shift duration filter comprises removing (806) from the set of jobs a job for which the expected job duration plus an estimate of battery usage (520) during travel is greater than the shift duration.

15. The method of any of claims 6 to 14, wherein selecting (704) multiple jobs comprises the computing system applying (702) a preferences filter (446) which sorts at least a portion of the set of jobs according to an output from a machine learning model (448), the machine learning model trained at least in part on training data (452) which represents customer preferences (444).
